Europäisches Patentamt

European Patent Office

Office européen des brevets

(11) Publication number: **0 318 702**
**A2**

# EUROPEAN PATENT APPLICATION

(21) Application number: 88118026.9

(51) Int. Cl.⁴: **G06F 9/38**

(22) Date of filing: 28.10.88

| | |
|---|---|
| The title of the invention has been amended (Guidelines for Examination in the EPO, A-III, 7.3). <br><br> (30) Priority: 20.11.87 JP 293810/87<br> 21.12.87 JP 323361/87<br> 24.06.88 JP 154707/88<br> 30.10.87 JP 272947/87 <br><br> (43) Date of publication of application:<br> **07.06.89 Bulletin 89/23** <br><br> (84) Designated Contracting States:<br> **DE FR GB IT** | (71) Applicant: **HITACHI, LTD.**<br> **6, Kanda Surugadai 4-chome Chiyoda-ku**<br> **Tokyo(JP)** <br><br> (72) Inventor: **Nakazawa, Takuichiro**<br> **Wakyoryo 459-2, Naka-machi**<br> **Kodaira-shi Tokyo(JP)**<br> Inventor: **Hanawa, Makoto**<br> **3-1-3, Higashikoigakubo**<br> **Kokubunji-shi Tokyo(JP)**<br> Inventor: **Nishimukai, Tadahiko**<br> **1-3-39, Nishihashimoto**<br> **Sagamihara-shi Kanagawa(JP)** <br><br> (74) Representative: **Strehl, Schübel-Hopf,**<br> **Groening, Schulz**<br> **Maximilianstrasse 54 Postfach 22 14 55**<br> **D-8000 München 22(DE)** |

(54) Data processor with direct data transfer between coprocessor and memory.

(57) Data processing system has a microprocessor (1) containing a cache memory, a coprocessor (2) and a memory (3). When data is transferred from the coprocessor (2) to the memory (3), the data from the coprocessor (2) is transmitted to the cache memory in the microprocessor (1). In this constitution, when the data in the memory (3) is varied by the data from the coprocessor (2), data in the cache memory (3) is varied thereby the matching property of the data is held.

FIG. 1

# DATA PROCESSOR AND DATA PROCESSING SYSTEM HAVING SAME

## BACKGROUND OF THE INVENTION

The present invention relates to data processors, and more particularly to a microprocessor containing a cache memory. Further, the invention relates to data processing system having a data processor, and more particularly to data processing system having a microprocesor containing a cache memory and a coprocessor, for example, a coprocessor for calculating floating point.

The coprocessor is a processor which is connected to a main microprocessor such as a general-purpose data processor, and makes register set and instruction set of the microprocessor as if they were extended, and adds new processing capacity and high-speed operation function to the data processing system having the microprocessor.

Interface system between the main microprocessor and the coprocessor includes system where the main microprocessor detects instruction of the coprocessor, and executes bus cycle of transfer of command to the coprocessor or data transfer between the main memory and the coprocessor. In this case, the coprocessor installed on the outside of chip of the main microprocessor does not have means for generating address signal to indicate desired address within the main memory (including memory management unit) in order to simplify its constitution. Also in order to prevent the data processing system from being complicated, the control of the bus is managed by the main microprocessor as above described.

In such data processing system, even when data transfer is performed between the coprocessor and the main memory for example, data to be transferred is once taken into the main microprocessor and then transferred from the main microprocessor to the main memory or the coprocessor. That is, when data on the memory is transferred to the coprocessor, after the microprocessor (hereinafter referred to simply as "processor" or "MPU") reads the data from the memory, the MPU again writes the data to the coprocessor. Also when the operation result of the coprocessor is stored in the memory, the operation result of the coprocessor is once transferred to the MPU and then stored again from the MPU to the memory.

Regarding the coprocessor, its details are described, for example, in Motorola Inc. MC68881 Floating-Point Coprocessor User's Manual, 1985.

In order to make the function high, the data processing system is provided, in addition to the microprocessor, with a direct memory access controller (hereinafter referred to as "DMAC"), an interrupt controller or the like. In this case, a device capable of becoming a bus master module in the data processing system, in addition to the microprocessor on which the coprocessor depends, is the dynamic memory access controller, the interrupt controller or the like as above described. Consequently, bus adjustment must be performed between the main processor and such module capable of becoming the bus master.

That is, when data within the coprocessor is transferred to the memory, after the data is once taken in the main processor, if bus open request to the processor is issued from the device other than the processor as above described, the main processor must abandon the bus right and suspend data transfer operation of the data to the memory, and after the bus open request is finished, the main processor again starts the data transfer to the memory.

The invention further relates to control of a cache memory built in a microprocessor, and more particularly to control of an on-chip cache memory suitable for a data processing system having a coprocessor such as a floating point arithmetic unit connected externally of the chip.

In a conventional microprocessor unit (MPU) such as Motorola MC 68020 to which a coprocessor such as a floating point arithmetic unit can be connected externally of a chip, data transfer between a main memory and the coprocessor is effected through the MPU by the reasons that:

(1) the coprocessor does not have address generation means (memory management unit) for the purpose of simplification of the coprocessor, and

(2) the system will be complex unless the MPU has a bus control right.

Namely, when data in the main memory is to be transferred to the coprocessor, the MPU writes the data into the coprocessor after the MPU has read the data from the main memory. When an arithmetic result of the coprocessor is to be stored in the main memory, the arithmetic result of the coprocessor is once transferred to the MPU and then it is stored to the memory from the MPU. The detail thereof is described in Motorola Inc. MC68881 Floating Point Coprocessor User's Manual 1985.

In the above data transfer method, however, two bus cycles are required and processing performance is lowered. The inventors of the present invention studied a system in which the MPU produces a read/write request signal and an address and the coprocessor receives or supplies data from or to a bus so that the data transfer between the main memory and the coprocessor is effected in one bus cycle.

## SUMMARY OF THE INVENTION

As above described, if the data transfer procedure of two steps is adopted in that data calculated in the coprocessor and to be transferred to the main memory is once taken into the main processor, and that the taken data is supplied to the main memory in the subsequent memory cycle, the data transfer processing is delayed and therefore the occupation period of the common bus becomes long and the operation efficiency of the system is deteriorated.

Also if the main processor contains a cache memory such as an operand cache memory, when data of the operation result from the coprocessor is supplied to the main memory in accordance with the above-mentioned procedure, after content of the operand cache memory is rewritten by the data once taken into the main processor, the data from the main processor is transferred to the main memory. Consequently, if the main processor receives the interrupt processing during the above-mentioned procedure, problem occurs in that the holding data in the same address cannot keep matching property between the operand cache memory and the main memory which should hold commonly the data in the desired address of the main memory. In order that the operand cache memory and the main memory are rewritten in the same timing by the data once taken into the main processor and the matching property of the holding data between these memories is kept, for example, a data buffer constituted by a memory other than the operand memory must be particularly installed to an input/output control unit of the main processor and the data must be stored previously in the data buffer, thereby constitution of the main processor and its control procedure are complicated. Further, in such method, it is difficult to prevent deterioration of the operation efficiency of the system as above described.

In this connection, the inventor has thought system that in order to execute the data transfer between the memory and the coprocessor in one bus cycle first, the MPU outputs write command signal as well as address signal indicating desired address within the main memory to perform the data transfer between it and the coprocessor, and at the same time the coprocessor inputs data on the bus directly or outputs data to the bus. The inventor has further studied the case that the main processor includes a cache memory such as an operand cache memory. As a result, even at new data transfer system as above described, if the MPU contains the cache memory, although data on the main memory to hold its copy to the cache memory within the MPU is rewritten by the coprocessor, the copy data on the cache memory may not be rewritten. Consequently problem is found in that incoincidence occurs in the content of the main memory and the cache memory, thereby consistency (matching property) cannot be guaranteed. Also at lead cycle to transfer data from the main memory to the coprocessor, problem is found in that hit is performed to the cache memory contained in the MPU, i.e., the on-chip cache memory, and access may not be performed to the main memory.

On the other hand, in the data processing system as above described, when the holding data of the coprocessor to be made the bus slave module with respect to the main processor is transferred to the memory, if the transfer procedure is adopted in that data to be transferred to the memory is once taken into the main processor, and that the taken data is subsequently supplied to the memory in accordance with the bus cycle controlled by the main processor, every time the bus open command is issued from other module capable of becoming the bus master between two data transfer operations, the MPU moves the bus right to other module, thereby problem occurs in that the operation efficiency of the system is deteriorated due to the overhead following the moving of the bus right.

The inventor has studied the new data transfer system as above described, i.e., system that the operation data of the coprocessor to be made the bus slave module with respect to the main processor is transferred directly from the coprocessor to the memory. When the data transfer system is applied to the data processing system, the inventor has found as a result of studying that following items must be considered. That is, the timing of output of data from the coprocessor to the bus must be commanded in synchronization with the access cycle of the main processor. Also in the control of the bus adjustment between the module capable of becoming the bus master other than the MPU and the MPU itself, the timing to command output of data to the coprocessor must be considered.

An object of the invention is to provide a data processor wherein efficiency of the data transfer can be improved.

Another object of the invention is to provide data processing system wherein efficiency of the data transfer ca be improved.

Another object of the invention is to provide data transfer system wherein efficiency of the data transfer can be improved.

Another object of the invention is to provide a data processor and data processing system having high reliability.

Another object of the invention is to provide a microprocessor wherein efficiency of the data transfer can be improved.

Another object of the invention is to provide a microprocessor containing a cache memory and having high reliability.

Another object of the invention is to provide data processing system wherein data outputted from a coprocessor can be stored in a memory efficiently based on the control of a main processor.

Another object of the invention is to provide data processing system wherein when data outputted from the coprocessor is stored in the memory, matching property of data to be held in the same address can be kept between the cache memory included in the main processor and the memory.

Another object of the invention is to provide bus adjustment control system wherein when data of a specific device to be made the bus slave module with respect to the processor is transferred to other bus slave module, increase of the moving number of the bus right can be suppressed and the operation efficiency of the system can be improved.

Another object of the invention is to provide microcomputer system wherein the interface is simplified and the error operation of the bus access is prevented.

The inventors have further notified that, in the above data transfer method, if the cache memory is built in the MPU, data on the main memory which retains a copy in the cache memory of the MPU may be renewed by the coprocessor and the data content of the main memory and the data content of the cache memory do not match and the data consistency is not assured.

The inventors also noticed that the on-chip cache memory is hit in a read mode and access to the main memory is inhibited and the data of the cache memory cannot be supplied to the external bus.

It is, therefore, an object of the present invention to provide a control method and system for an MPU on-chip cache memory which solves the problems discussed above.

The foregoing and other objects and novel features of the invention will be apparent from the description of the specification and the accompanying drawings.

Outline of several typical inventions among those disclosed in the present application will be briefly described as follows:

(1) In data processing (microprocessor) system comprising a main processor, a coprocessor which can perform data transfer based on control of the main processor, and a memory connected to the main processor and the coprocessor so as to enable input/output of data, when the main processor commands (indicates) output of data to the coprocessor, the main processor can perform simultaneously operation of taking the output data of the coprocessor into the inner circuit block such as a cache memory contained in the main processor, and control of the memory cycle so as to transfer the output data to the memory. For example, when the coprocessor outputs data to be transferred to the memory in the memory cycle controlled by the main processor, the main processor can take the data into the cache memory contained in the main processor. Thereby when the operation result of the coprocessor is stored in the memory, data outputted from the coprocessor is directly taken into the memory through the data bus and also taken into the cache memory contained in the main processor. Consequently, when the data outputted from the coprocessor is stored in the memory efficiently, data held to the same address of the cache memory and the memory can keep matching property.

(2) Data processing system comprises:

1 means for reading data on the bus into the MPU, when the data is transferred from the coprocessor to the memory, although the MPU outputs the read/write signal of the bus in state of commanding write;

2 means for retrieving address within the cache memory even when the data is transferred from the coprocessor to the memory into the cache memory contained in the MPU;

3 means for writing the data from the coprocessor read from the bus into the cache memory, if the write address is coincident with the address within the cache memory; and

4 means for suppressing hit to the contained cache memory and performing access to the main memory, in the lead cycle to transfer data from the main memory to the coprocessor.

When the data is transferred from the coprocessor to the memory, the MPU outputs the read/write command signal in write state, and commands the desired address in the memory.

Also the coprocessor is commanded (indicated) to output the write data to the bus, and the data outputted on the bus is read in the MPU.

On the other hand, the cache memory control circuit retrieves interior of the cache memory, and determines whether data corresponding to the desired address exists or not. If it exists (hit), content of the cache memory is updated using the data read from the bus.

According to the above-mentioned operation, coincidence between content of the cache memory and content of the main memory can be secured.

Also when the data is transferred from the desired address in the main memory to the coprocessor, even if data corresponding to the desired address exists within the cache memory, the MPU starts the bus cycle to the outside of the MPU, and reads data from the desired address in the main memory.

According to the above-mentioned operation, the data can be transferred securely to the coprocessor.

(3) Data processing system comprises a processor having arbitration function of the bus, a second bus slave module such as a coprocessor to perform the data transfer to a first bus slave module such as a memory in the bus cycle controlled by the processor, and a bus master module which can request the bus open to the processor. The processor supplies the second bus slave module with control signal for commanding (indicating) the data output start timing to the first bus slave, and the command of the data output start by the control signal is suppressed during the bus open to the bus master module. According to the above-mentioned means, the processor commands (indicates) the second bus slave module of the data output start timing to the first bus slave module, thereby the output data of the second bus slave module can be transferred directly to the first bus slave module in synchronization with the bus cycle controlled by the processor. In prescribed timing before starting the bus cycle for the data transfer, if the processor detects the bus open request from other module capable of becoming a bus master, the processor releases bus right until the bus open request is finished, and corresponding to this, the processor suppresses command of the data output start timing to the second bus slave module. Thereby the bus arbitration between the data transfer operation from the second bus slave module to the first bus slave module and the bus open request from other module capable of becoming the bus master to the processor is performed securely. Further, after the bus cycle for the data transfer from the second bus slave module to the first bus slave module is once started by the main processor, the bus open request from other module capable of becoming a bus master is not accepted before the bus cycle is finished. Thereby increase of the moving number of the bus right is suppressed in the data transfer from the second bus slave module based on the access control of the processor, and the operation efficiency of the data processing system can be improved.

(4) In microcomputer system including a coprocessor such as a memory, an exclusive terminal for transmitting/receiving the bus access signal to the coprocessor and the microprocessor is installed. According to the above-mentioned means, the bus cycle end signal transmitted from the coprocessor to the microprocessor is transmitted through the exclusive signal line and the terminal to the microprocessor. Consequently, the bus access end from other external device such as the memory and the bus cycle end from the coprocessor can be distinguished, and the error operation of the microcomputer can be decreased in the simple constitution.

The above object can be further achieved by the provision of:

(1) means for introducing data on an external bus into the MPU when the data is to be stored into the main memory from the coprocessor in spite of the MPU outputting a write request of a read/write request signal of the bus.

(2) means for searching an address in the cache memory when the data is to be stored into the main memory from the coprocessor, in the cache memory built in the MPU,

(3) means for writing the data of the coprocessor introduced from the external bus into the cache memory if a write address matches to the address stored in the cache memory, and

(4) means for starting an external bus cycle even if a read memory address hits the stored address of the built-in cache memory in a read cycle for transferring the data to the coprocessor.

When the data is to be transferred from the coprocessor to the main memory, the MPU outputs a write request of the read/write request signal, and also outputs a memory address.

It also requests to the coprocessor to output write data to the external bus, and it writes the data outputted to the external bus into the main memory.

On the other hand, the cache memory control circuit searches the cache memory to determine whether a data corresponding to the search address exists or not. If it exists (cache hit), it updates the content of the cache memory by using the data read from the external bus.

In this manner, the coincidence of the content of the cache memory and the content of the main memory is assured.

When the data is to be transferred to the coprocessor, the MPU starts the external bus cycle even if the corresponding data exists in the cache memory (cache hit) to read the data from the main memory or cache memory to the external bus.

In this manner, the data is transferred to the coprocessor.

## BRIEF DESCRIPTION OF THE DRAWINGS

FIG. 1 is a block diagram of data processing system as an embodiment of the invention;

FIG. 2 is a block diagram of an example of an input/output control unit in a microprocessor;

FIG. 3 (A) ~ (M) is a time chart illustrating operation that data outputted from a coprocessor is transferred to a main memory and taken into an operand cache memory of a main processor;

FIG. 4 is a block diagram of data processing system as an embodiment of the invention;

FIG. 5 is a schematic block diagram of a microprocessor;

FIG. 6 (A) ~ (J) is a time chart illustrating an example of bus intervention control that when data is transferred from a coprocessor to a memory, the transfer of the data has the priority;

FIG. 7 (A) ~ (J) is a time chart illustrating an example of bus intervention control that when data is transferred from a coprocessor to a memory, bus right request of an external device has the priority to the transfer of the data;

FIG. 8 is a block diagram of microcomputer system as an embodiment of the invention;

FIG. 9 (A) ~ (F) is a timing chart illustrating an example of bus access of an external device;

FIG. 10 (A) ~ (E) is a timing chart illustrating an example of bus access of a coprocessor;

FIG. 11 is a block diagram of an example of microprocessor system studied before the invention;

FIG. 12 is a block diagram of data processing system as an embodiment of the invention;

FIG. 13 is a flow chart illustrating control system of a cache memory shown in FIG. 12;

FIG. 14 is a flow chart illustrating control system of a bus interface member shown in FIG. 12;

FIG. 15 shows a configuration of another embodiment of a data processing system of the present invention; and

FIG. 16 shows a flow chart for an operation of the data processing system of Fig. 15.

## DESCRIPTION OF THE PREFERRED EMBODIMENTS

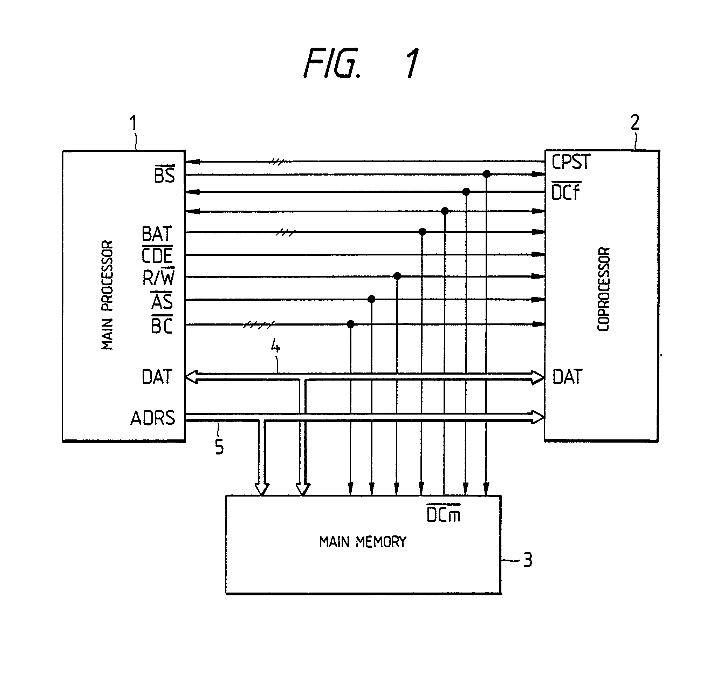

FIG. 1 is a block diagram of data processing system as an embodiment of the invention.

The data processing system shown in FIG. 1, although not particularly limited thereto, comprises typically a main processor 1 such as a microprocessor being a general-purpose processor, a coprocessor 2 having function of calculation of floating point, high-precision calculation of transcendental function or the like, and a main memory 3 composed of dynamic RAMs (random access memory). The above-mentioned three functional blocks, although not particularly limited thereto, are formed on individual semiconductor substrates respectively by known semiconductor integrated circuit manufacturing technology. Although not particularly limited thereto, the main memory 3 is composed of a plurality of dynamic RAMs and logic circuits, and the dynamic RAMs are formed on semiconductor substrates different from each other, and the logic circuits are composed of a plurality of logic ICs formed on semiconductor substrates different from each other.

The main processor 1, the coprocessor 2 and the main memory 3 are mutually connected through a data bus 4 composed of 32 bits for example, and data DAT can be inputted or outputted between these members. Also address signal ADRS outputted from the main processor 1 can be supplied through an address bus 5 to the coprocessor 2 and the main memory 3.

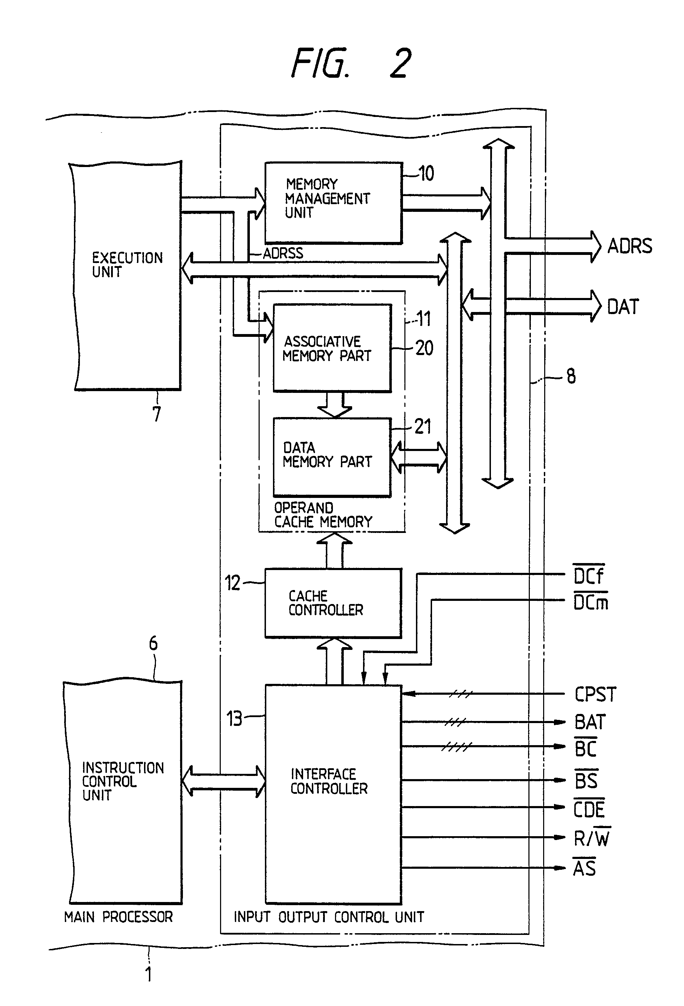

The main processor 1, although not particularly limited thereto, as shown in FIG. 2, comprises an instruction control unit 6 which receives instruction and forms control signal in accordance with the instruction, an execution unit 7 which performs various sorts of operation processing in accordance with the control signal outputted from the instruction control unit 6 and executes the instruction actually, and an input/output control unit 8 which performs interface between the coprocessor 2, the main memory 3 and internal circuits of the main processor 1.

The instruction control unit 6, although not particularly limited thereto, comprises an instruction prefetch member which prefetches instruction, an instruction decoding member which decodes operation code of the prefetched instruction, and a microprogram control member which reads series of micro instructions in sequence using content decoded in the instruction decoding member as address, and forms various sorts of control signal required to execute the instruction based on the read micro instructions.

The input/output control unit 8, although not particularly limited thereto, as shown typically in FIG. 2, comprises a memory management unit 10, an operand cache memory 11, a cache controller 12, and an interface controller 13.

The memory management unit 10 is provided with an address conversion table which converts the logic address formed by the execution unit 7 into physical address, and converts the logic address supplied from the execution unit 7 into physical address corresponding thereto and outputs the physical address as address signal ADRS.

The operand cache memory 11 holds data in desired address of operand storage region of the main memory 3 commonly with the main memory 3 corresponding to the desired address. The operand cache memory 11, although not particularly limited thereto, is composed of an associative memory part 20 such as a content addressable memory and a data memory part 21. The data memory part 21, although not particularly limited thereto, is composed of a static RAM which holds data DAT rewritable. The associative memory part 20 forms address signal for addressing the data memory part 21. The associative memory part 20, although not particularly limited thereto, stores the address signal ADRSS supplied from the execution unit 7 in word unit in sequence cyclically, and collates the inputted address signal ADRSS with the address signal ADRSS as retrieved data which is stored and held in the associative memory part 20, and retrieves the storage cell group where content of both is coincident and forms address signal for the data memory part 21 corresponding to the storage cell group where content is coincident. Consequently, if the address signal ADRSS is supplied to the operand cache memory 11 from the outside, when address signal coincident with the supplied address signal ADRSS is stored as retrieved data in the associative memory part 20, address signal corresponding to the address signal ADRSS is supplied from the associative memory part 20 to the data memory 21. This supplied address signal indicates desired address in the data memory part 21, and read/write of the data DAT is performed to the desired address. When address signal coincident with the address signal ADRSS supplied to the cache memory 11 is not stored as retrieved data in the associative memory part 20, the address signal ADRSS is stored in precribed storage region of the associative memory part 20, and address signal becoming pair with prescribed storage region to store the address signal ADRSS is supplied to the data memory 21. This supplied address signal indicates a memory cell to which prescribed data DAT is written.

The cache controller 12, although not particularly limited thereto, is controlled by the interface controller 13 and controls access to the operand cache memory 11.

The interface controller 13 transfers prescribed interface signal or status information based on control of the instruction control unit 6 to the coprocessor 2 or the main memory 3. Information obtained by this is supplied to the instruction control unit 6. The instruction control unit 6 branches micro flow into prescribed control procedure corresponding to this information. Further the interface controller 13 controls the cache controller 12. When the operand cache memory 11 transfers data to the coprocessor 2 or the main memory 3, the interface controller 13 is synchronized with control of interface signal for the bus controller outputted by the interface controller 13 or controls the cache controller 12 based on interface signal from the outside, thereby access of the operand cache memory 11 can be controlled.

The inner constitution of the coprocessor 2, although not shown, comprises a control unit including a command fetch member, a command decoding member to decode the fetched command, and a microprogram control member which reads series of micro instruction in sequence using content decoded by the command decoding member as address and forms various sorts of control signal required for the command execution based on the read micro instruction; an execution unit which performs various sorts of operation processing in accordance with the control signal outputted from the control unit and executes the command actually; and an input/output unit which performs interface to the main processor 1 or the main memory 3.

Although not particularly limited thereto, in macro instruction of the system (One macro instruction is composed of a plurality of micro instructions for example, and these micro instructions are executed thereby one macro instruction is executed.), when instruction fetched by the main processor 1 is instruction to the main processor 1, the main processor 1 executes operation or data transfer in accordance with this instruction. When instruction fetched by the main processor 1 includes instruction to the coprocessor 2, the main processor 1 cuts field required for the coprocessor 2 from the instruction, and produces command and supplies it to the coprocessor 2. When the coprocessor 2 executes the command supplied thereto, if input/output of data by the coprocessor is included, control of the bus cycle required for performing the input/output of the data is performed by the main processor 1.

In the embodiment, the coprocessor 2 does not contain a memory management unit as above described. Consequently, address signal supplied to the main memory 3 or the like is formed by the maim processor 1. Thereby address signal at reading instruction from the main memory 3 for example is formed by the main processor 1.

The main processor 1 outputs bus start signal $\overline{BS}$, read/write signal R/$\overline{W}$, address strobe signal $\overline{AS}$, bus access type data BAT and byte control data $\overline{BC}$ as interface signals so as to control the bus cycle by hand shake to the coprocessor 2 and the main memory 3 respectively, and outputs coprocessor data enable signal $\overline{CDE}$ to the coprocessor 2. These interface signals are outputted from the interface controller 13.

The read/write signal R/$\overline{W}$ indicates transfer direction of data, i.e., the read/write operation, the coprocessor data enable signal $\overline{CDE}$ by its low level indicates output of data to the coprocessor 2, the address strobe signal $\overline{AS}$ by its low level indicates that the address signal ADRS outputted by the main processor 1 is fixed on the address bus 5, and the bus start signal $\overline{BS}$ by its low level indicates start of the bus cycle. The bus access type data BAT is data of three bits to indicate sort of the bus access required by the main processor 1, and indicates, for example, coprocessor command transfer request or operand transfer request by combination of the three bits. That is, the main processor 1 in accordance with the data BAT indicates that the transfer object is command or operand. The byte control data $\overline{BC}$ is data of four bits to indicate the data size to be transferred in byte unit by its low level.

In various types of data transfer between the main processor 1, the coprocessor 2 and the main memory 3, start and control of the bus cycle are performed by the main processor 1 as already described. Since the coprocessor 2 may become the transfer origin of data, although not particularly limited thereto, the coprocessor 2 outputs the data complete signal $\overline{DCf}$ to the main processor 1 and the main memory 3, and indicates by variation of the data complete signal $\overline{DCf}$ to low level that the data to be transferred is fixed. Also the main memory 3, although not particularly limited thereto, outputs the data complete signal $\overline{DCm}$ to the main processor 1 and the coprocessor 2, and indicates by variation of the data complete signal $\overline{DCm}$ to low level that the data to be transferred is taken by the main memory 3.

When data or command is transferred, status interface between the main processor 1 and the coprocessor 2 is performed by coprocessor status data CPST outputted from the coprocessor 2 to the interface controller 13. The coprocessor status data CPST, although not particularly limited thereto, indicates the inner state of the coprocessor in three bits. For example, transfer command receiving, command executing, error generating during the command executing, transfer preparation finishing of data obtained by the operation execution end and the like are represented by combination of the three bits.

When execution of the operation is commanded from the main processor 1 to the coprocessor 2 and the operation result is stored in the main memory 3, by value of combination of the three bits of the coprocessor status data CPST outputted from the coprocessor 2, if the main processor 1 discriminates that the operation execution in the coprocessor 2 ends and transfer preparation of the data obtained by the execution is finished, the processing procedure of the main processor 1 based on the discrimination is branched to micro flow for transferring data from the coprocessor 1 to the main memory 3, and the main processor 1 starts the control of the bus cycle in accordance with the micro flow.

Particularly, when the data outputted from the coprocessor 2 is stored in the main memory 3, the interface controller 13 included in the main processor 1, based on various sorts of interface signal supplied to the interface controller 13 or the control signal supplied from the control unit 6, responds to the control of the bus cycle and controls the cache controller 12 in synchronizing with the bus cycle. Thereby the csche controller 12 controls the cache memory 11 so that the data DAT outputted from the coprocessor 2 to the data bus 4 is taken in prescribed region within the data memory part 21 corresponding to the address signal ADRS outputted from the main processor 1 to the address bus 5 for the access of the main memory 3.

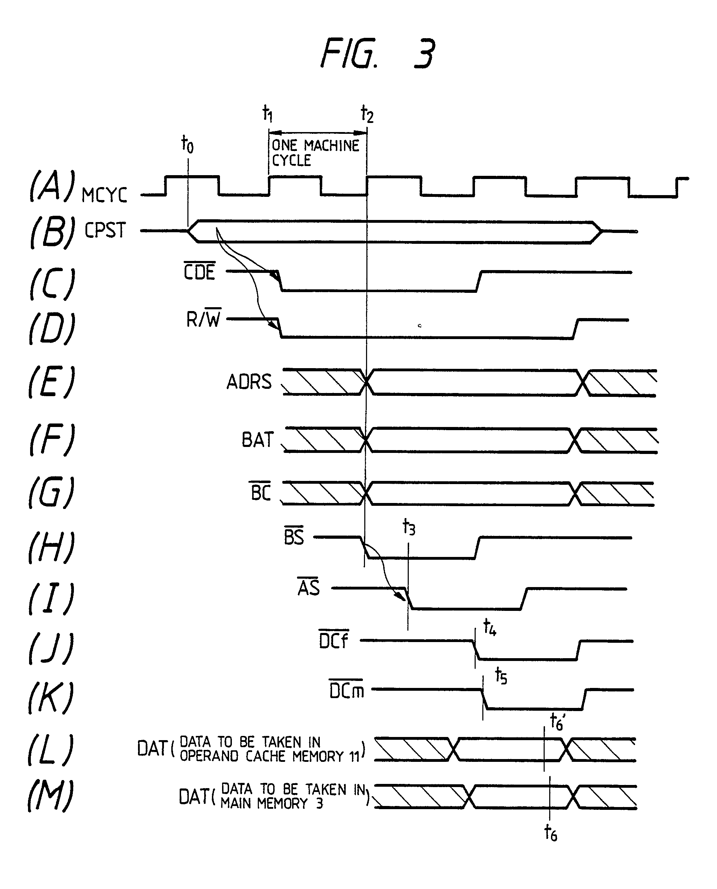

Next, operation in the case that data outputted from the coprocessor 2 is stored in the main memory 3 will be described referring to a time chart of FIG. 3 (A) ~ (M).

The coprocessor 2 performs operation processing in accordance with command supplied from the main processor 1. For example, when prescribed operation processing is finished, at time $t_0$, the coprocessor 2, supplies the coprocessor data CPST to the main processor 1, and indicates by combination of bits that transfer operation for transferring data obtained by the operation processing is ready.

Thereby based on the interface controller 13 receiving the coprocessor status data CPST, the processing procedure of the main processor 1 is branched to micro flow for transferring data from the coprocessor 2 to the main memory 3. In the micro flow, address required for the transfer of the data is calculated by the execution unit 7, and the interface controller 13 varies the coprocessor data enable signal $\overline{CDE}$ to low level at time $t_1$ in synchronization with machine cycle MCYC and commands output of the data to the coprocessor 2, and further varies the read/write signal R/$\overline{W}$ to low level and commands write of the data to the main memory 3.

Subsequently at time $t_2$ after one machine cycle, the main processor 1 starts the bus cycle required for the data transfer.

That is the bus start signal $\overline{BS}$ is varied to low level and the start of the bus cycle is informed to the coprocessor 2 and the main memory 3, and address signal ADRS corresponding to address to which the data should be transferred is outputted from the input/output control unit 8, and further the bus access type data BAT indicates to the outside that the transfer object is the operand data calculated in the coprocessor 2 and the byte controller data $\overline{BC}$ indicates size of the data to be transferred then.

At time $t_3$ when the address signal ADRS outputed from the main processor 1 is fixed on the address bus, the address strobe signal $\overline{AS}$ is varied to low level. Thereby the coprocessor 2 substantially starts the output of the data DAT obtained by the operation processing, and varies the data complete signal $\overline{DCf}$ to low level at time $t_4$ when the output data DAT is fixed on the data bus 4. The main memory 3 receiving this signal takes the data DAT fixed on the data bus 4 into the inside through a data input latch circuit (not shown) within the main memory 3, and varies the data complete signal $\overline{DCm}$ to low level at the timing of completing the taking (time $t_5$).

Thereby the main memory 3 writes the data DAT outputted from the coprocessor 2 into prescribed storage region indicated by the address signal ADRS (time $t_6$).

When the data DAT outputted from the coprocessor 2 is stored in the main memory 3, the interface controller 13 included in the main processor 1, based on various sorts of interface signal supplied to the interface controller 13 or the control signal supplied from the instruction control unit 6, responds to the control of the bus cycle and controls the cache controller 12. That is, the interface controller 13 detects that the data complete signal $\overline{DCf}$ is varied to low level thereby the data DAT outputted from the coprocessor 2 is fixed on the data bus 4, and controls the cache memory 12 so that the data DAT outputted from the coprocessor 2 to the data bus 4 is taken in the prescribed region within the operand cache memory 11 corresponding to the address signal ADRS outputted from the main processor 1 to the address bus for the access of the main memory 3. Thereby the data DAT from the coprocessor 2 is written in the prescribed address within the main memory 3 indicated by the address signal ADRS outputted from the main processor 1 and in the prescribed storage region within the cache memory 11 corresponding to the address. That is, the same data is written in the prescribed address within the main memory 3 and in the storage region within the cache memory 11 corresponding to the prescribed address. Thereby this write timing is made the time $t_6{'}$ nearly equal to the write timing $t_6$ for the main memory 3, and the main memory 3 and the cache memory 11 have the same data commonly in the same machine cycle.

If the data DAT outputted from the coprocessor 2 is stored in the main memory 3 and written in the cache memory 11, the address strobe signal $\overline{AS}$ is negated thus the data transfer operation ends.

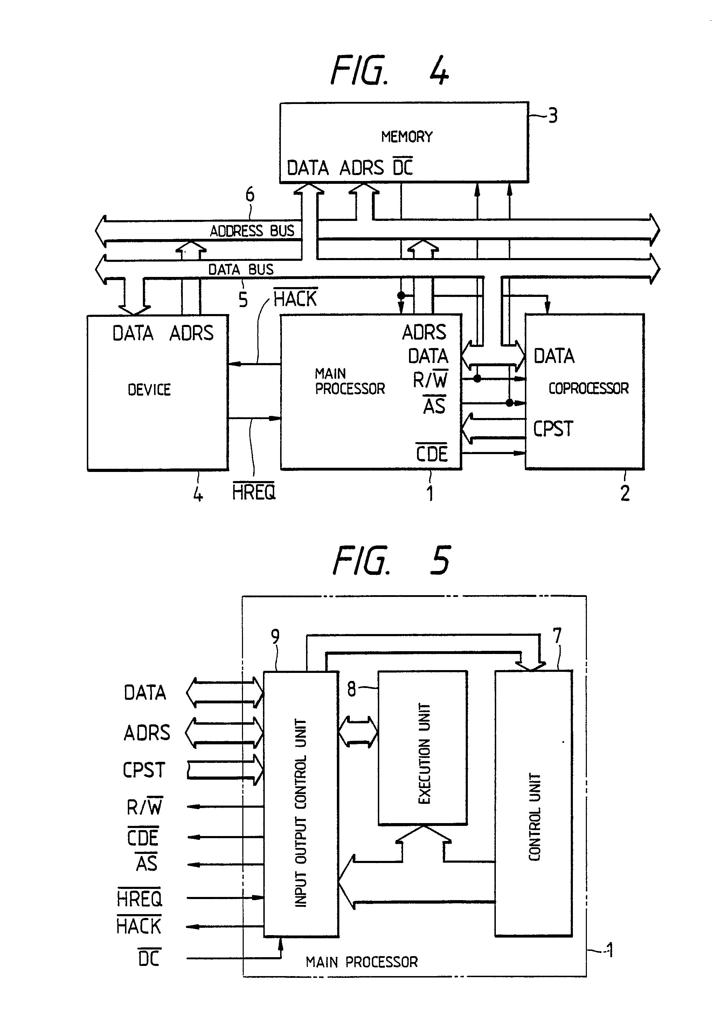

FIG. 4 is a block diagram of data processing system as another embodiment of the invention.

The data processing system shown in FIG. 4, although not particularly limited thereto, comprises typically a main processor 1 such as a microprocessor being a general-purpose processor, a coprocessor 2 as a second bus slave module having function of calculation of floating point, high-precision calculation of transcendental function or the like, and a memory 3 as a first bus slave module composed of dynamic RAMs (random access memory). Further, the data processing system of this embodiment comprises module such as a direct memory access controller or an interrupt controller capable of becoming a bus master in addition to the main processor 1. In FIG. 4, such module is shown as an external device 4. The above-mentioned functional blocks, although not particularly limited thereto, are formed on individual semiconductor substrates respectively by known semiconductor integrated circuit manufacturing technology. Although not particularly limited thereto, the main memory 3 is composed of a plurality of dynamic RAMs and logic means, and the logic means are composed of a plurality of logic ICs.

The main processor 1, the coprocessor 2, the memory 3 and the external device 4 are mutually connected through a data bus 5 composed of 32 bits for example, so that data DAT can be inputted or outputted. Also address signal ADRS outputted selectively from the main processor 1 and the external device 4 can be supplied through an address bus 6 to the memory 3.

The main processor 1, although not particularly limited thereto, as shown in FIG. 5, comprises a control unit 7, an execution unit 8 and an input/output control unit 9.

The control unit 7, although not particularly limited thereto, comprises a prefetch part which prefetches macro instruction, a micro address controller which decodes operation code of the prefetched instruction and forms micro address, and generates next micro address corresponding to next address of the micro instruction, and further performs branch control of the micro instruction, a micro ROM (read only memory) to which signal outputted from the micro address controller is accessed as address, a micro instruction decoder which forms various sorts of control signal based on the micro instruction read from the micro ROM, and a controller which controls the above-mentioned parts.

The execution unit 8 comprises an arithmetic logic calculating device which performs calculation of operand and calculation of address based on various sorts of control signal outputted from the control unit 7, and various sorts of register which become temporary storage region of data and address.

The input/output control unit 9 performs interface between various devices on the system, such as the coprocessor 2 and each member within the main processor 1, and various sorts of control signal such as bus timing signal produced by the input/output control unit 9 itself or formed through the control unit 7 are outputted in prescribed timing. Also the input/output control unit 9 transmits status signal and macro instruction supplied from the outside of the main processor 1 to the control unit 7. In the input/output control unit 9, input/output of data or output of address signal is performed through an input/output buffer of tri-state type. The input/output control unit 9 is provided with a bus arbiter (not shown) to intervene in the bus request from the external device 4. When the main processor 1 releases the bus right in response to the bus request from the external device 4, an output buffer for outputting the address signal, an output buffer for outputting the data and like are controlled to be in the state where their output impedance is high, i.e., the high output impedance state.

Moving of the bus occupation right between the main processor 1 and the external device 4, although not particularly limited thereto, is controlled by transfer of hold request signal $\overline{HREQ}$ supplied from the external device 4 to the main processor 1 and hold acknowledge signal $\overline{HACK}$ supplied from the main processor 1 to the external device 4. When the hold request signal $\overline{HREQ}$ is asserted to low level, it represents that the external device 4 requests the bus right from the main processor 1. On the contrary, when the hold acknowledge signal $\overline{HACK}$ is asserted to low level, it represents that the main processor 1 acknowledges the moving of the bus right to the external device 4.

When the external device 4 must use the bus, it asserts the hold request signal $\overline{HREQ}$. On the other hand, the main processor 1, although not particularly limited thereto, samples the hold request signal $\overline{HREQ}$ in prescribed timing of each machine cycle. If the main processor 1 detects that the hold request signal $\overline{HREQ}$ sampled requests use of the bus right, detection is performed regarding whether the timing is that before the start of the bus cycle performed by the main processor 1 itself or not. If the timing is that before the start of the bus cycle of the main processor 1, the main processor 1 puts the output buffer for outputting various sorts of control signal (read/write signal R/ $\overline{W}$, address strobe signal $\overline{AS}$ etc. as hereinafter de-

scribed) to control the address signal or the bus cycle in the high output impedance state. Thereby each signal is put in the high output impedance state. And then the main processor 1 asserts the hold acknowledge signal $\overline{HACK}$ to the external device 4, and abandons the use right of the bus.

The external device 4 receiving the hold acknowledge signal $\overline{HACK}$ asserted makes the address signal or the bus cycle control signal (for example, read/write signal R/ $\overline{W}$, address strobe signal $\overline{AS}$ etc.) active, and starts the use of the bus. If the use of the bus by the external device 4 ends, the external device 4 puts the output state of the output buffer for outputting the address signal or the bus cycle control signal in the high output impedance state, and then negates the hold request signal $\overline{HREQ}$ and supplies it to the main processor 1. Detecting negate of the hold request signal $\overline{HREQ}$, the main processor 1 negates the hold acknowledge signal $\overline{HACK}$ in prescribed timing, and has the use right of the bus again thereby starts the use of the bus again.

The coprocessor 2 forms neither address signal nor bus cycle control signal such as read/write signal R/ $\overline{W}$, address strobe signal $\overline{AS}$. Consequently, the coprocessor 2 does not become a bus master, but is made a bus slave module depending on the main processor 1. Although not particularly limited thereto, when instruction (macro instruction) fetched by the main processor 1 includes instruction to the coprocessor 2, the main processor 1 cuts field required for the coprocessor 2 from the instruction, and produces command and supplies it to the coprocessor. As clearly understood from the above description, the coprocessor 2 itself does not have the bus control function, and when the coprocessor 2 executes the command to transfer the data, the bus cycle required for the execution is performed by the control of the main processor 1.

The main processor 1, although not particularly limited thereto, outputs read/write signal R/ $\overline{W}$ which indicates the data transfer direction, address strobe signal AS which indicates by its low level that the address signal ADRS outputted by the main processor 1 is fixed on the address bus 6 and the like as interface signals so as to control the bus cycle to the coprocessor 2 and the memory 3. Also the main processor 1 outputs coprocessor data enable signal $\overline{CDE}$ to the coprocessor 2. The coprocessor data enable signal $\overline{CDE}$ in similar manner to the above-mentioned embodiment is timing signal which indicates output of data to the coprocessor 2 by its low level.

In the data processing system of the embodiment, data transfer between the coprocessor 2 and the memory 3 in similar manner to the above-mentioned embodiment (FIG. 1 ~ FIG. 4) is performed in accordance with the bus cycle controlled by the main processor 1 directly between both units through the data bus 5.

That is, when the data is transferred from the memory 3 to the coprocessor 2, the main processor 1 makes the read/write signal R/ $\overline{W}$ high level, and outputs the prescribed address signal. Thereby the memory 3 is accessed in read state. Consequently, the memory 3 outputs data of address indicated by the address signal, and in the timing that this data is fixed on the data bus 5, data complete signal $\overline{DC}$ is asserted to low level. The data complete signal $\overline{DC}$ is supplied to the main processor 1 and the coprocessor 2, and the coprocessor 2 takes the data on the data bus 5 into the inside in timing synchronous with the assert timing of the data complete signal $\overline{DC}$. The main processor 1 finishes the bus cycle in the prescribed timing synchronous with the assert timing of the data complete signal $\overline{DC}$.

When the data is transferred from the coprocessor 2 to the memory 3, the coprocessor data enable signal $\overline{CDE}$ is asserted in synchronizing with the write operation of the memory 3 in the bus cycle started by the main processor 1, and the timing of outputting the data is indicated to the coprocessor 2. The coprocessor 2 to which the coprocessor data enable signal $\overline{CDE}$ is supplied outputs the data onto the data bus 5 in the prescribed timing synchronous with the assert timing. The timing that the output data is fixed on the data bus 5 corresponds to the timing that the memory 3 takes the write data. The memory 3 takes the data into a data input buffer (not shown) or the like within the memory 3, and asserts the data complete signal $\overline{DC}$ to the memory 3 in response to the data taking for example. If the data complete signal $\overline{DC}$ is asserted, the main processor 1 finishes the bus cycle in response to the assertion, and the coprocessor 2 finishes the output operation of the data.

The inner state of the coprocessor 2 is supplied to the main processor 1 by coprocessor status data CPST. The coprocessor status data CPST, although not particularly limited thereto, indicates the inner state of the coprocessor 2 in three bits. For example, transfer request of operand or command, transfer command receiving, command executing, error generating during the command executing, transfer preparation finishing of data obtained by the operation execution and the like are represented by combination of the three bits. The coprocessor status data CPST is supplied from the input/output control unit 9 of the main processor 1 to the control unit 7. The control unit 7 branches micro flow by the inner interrupt or the like corresponding to the inner state of the coprocessor 2 assigned by the three bits of the status data CPST.

Particularly, if the main processor 1 detects the preparation finishing of the data transfer from the coprocessor 2 by the coprocessor status data CPST supplied from the coprocessor 2, the processing procedure of the main processor 1 is branched to the micro flow for transferring data from the coprocessor 2 to the memory 3, and the main processor 1 starts the inner operation to control the bus cycle in accordance with the micro flow. However, before the main processor 1 actually starts the bus cycle to the outside, it samples the hold request signal $\overline{HREQ}$. If the request of the bus right from the external device 4 is detected by the sampling, the input/output control unit 9 abandons the bus right and does not assert the coprocessor data enable signal $\overline{CDE}$ so as to intervene the bus right. Thereby during the bus access by the external device 4, the outputting of undesirable data from the coprocessor 2 can be suppressed.

Next, the bus arbitration operation between the main processor 1 and the external device 4 will be described in an example of the case that the data outputted from the coprocessor 2 is stored in the memory.

The coprocessor 2 performs operation processing in accordance with command supplied from the main processor 1. For example, when prescribed operation processing is finished, the coprocessor 2 supplies the coprocessor status data CPST to the main processor 1, and informs by combination of the three bits that the transfer preparation of data obtained by the operation processing is completed.

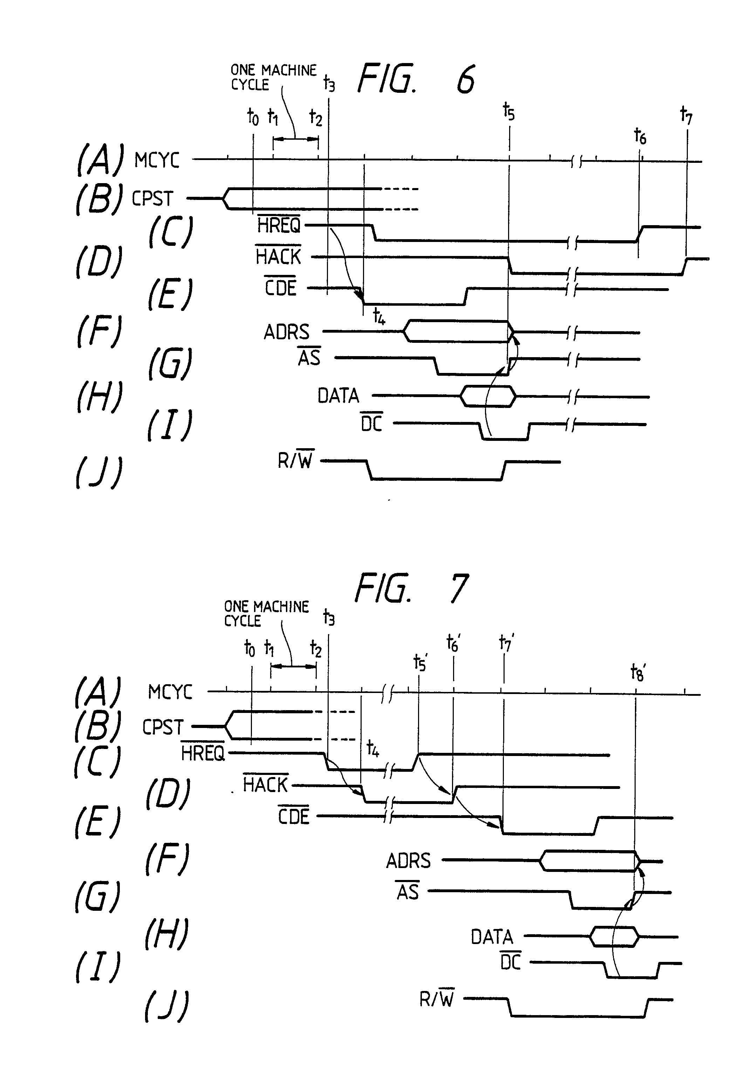

As shown in FIG. 6 (A) ~ (J), the main processor 1 detects the coprocessor status data CPST at time $t_0$, and at next machine cycle MCYC (time $t_1$ ~ $t_2$), the main processor 1 branches the inner processing procedure to the micro flow for transferring data from the coprocessor 2 to the memory 3, and calculates address or the like required for the data transfer in the execution unit 8 and performs the inner transfer of various sorts of bus cycle control signal such as address strobe signal $\overline{AS}$, read/write signal R/ $\overline{W}$, coprocessor data enable signal $\overline{CDE}$ or control data to form the control signal from the control unit 7 to the input/output control unit 9.

The input/output control unit 9 of the main processor 1, although not particularly limited thereto, samples the hold request signal $\overline{HREQ}$ in timing of 1/4 of the front half of each machine cycle MCYC. If negate of the hold request signal $\overline{HREQ}$ in the sampling timing (time $t_3$) after the branch cycle (time $t_1$ ~ $t_2$) of the micro flow, the bus cycle is started in synchronizing with the machine cycle MCYC at time $t_4$ or later. That is, at time $t_4$, the main processor 1 asserts the coprocessor data

enable signal $\overline{CDE}$ and commands the output timing of the data to the coprocessor 2, and varies the read/write signal R/$\overline{W}$ to low level and commands the write operation of the data to the memory 3. Subsequently, the address signal ADRS indicating address to which the data is transferred is outputted from the input/output control unit 9 to the address bus 6, and the address strobe signal $\overline{AS}$ is asserted in the timing that the address signal ADRS is fixed on the address bus 6. The coprocessor 2 begins to output the data DATA onto the data bus in the timing in the prescribed timing synchronous with the assert timing of the coprocessor data enable signal $\overline{CDE}$. Thereby the memory 3 takes the data DATA from the coprocessor 2 fixed on the data bus 5 into the inside through a data input latch circuit (not shown) or the like. The memort 3 asserts the data complete signal $\overline{DC}$ in the timing of finishing the taking, and writes the data DATA to the prescribed storage region indicated by the address signal ADRS.

Detecting assert of the data complete signal $\overline{DC}$, the main procesor 1 negates the address strobe signal $\overline{AS}$ in synchronizing with the machine cycle MCYC. Thereby the bus cycle for transferring the data ends at time $t_5$. Also the coprocessor 2 detects the assert of the data complete signal $\overline{DC}$, and the output operation of the data DATA is finished in the prescribed timing.

In FIG. 6 (A) ~ (J), the external device 4 asserts the hold request signal $\overline{HREQ}$ at time neighboring the start of the bus cycle by the main processor 1 started at time $t_4$ (in the timing later than time $t_3$), and requests the use of the bus right and maintains it. In the request of the bus right, although not particularly limited thereto, if the sampling is performed in each machine cycle even during executing the bus cycle and the main processor 1 finishes the bus cycle at time $t_5$, the main processor 1 abandons the bus right in response to the finishing of the bus cycle and asserts the hold acknowledge signal $\overline{HACK}$ and supplies the bus right to the external device 4.

If the use of the bus by the external device 4 is finished, the external device 4 puts the output state of the output buffer for outputting the address signal or the bus cycle control signal in the high output impedance state. Subsequently at time $t_6$, the hold request signal $\overline{HREQ}$ is negated. The main processor 1 detects the negate of the hold request signal $\overline{HREQ}$ in the prescribed sampling timing, thereby the hold acknowledge signal $\overline{HACK}$ is negated at time t7 and the use of the bus is started again.

On the other hand, as shown in FIG. 7 (A) - (J), if the assert of the hold request signal $\overline{HREQ}$ by the external device 4 is detected in the sampling time (time t3) after the branch cycle (time $t_1$ - $t_2$) of the micro flow, the main processor 1 gives the priority to the request of the bus right from the external device 4 in the machine cycle at time $t_4$ or later. That is, the main processor 1 abandons the bus right and asserts the hold acknowledge signal $\overline{HACK}$ at time $t_4$. In this case, the main processor 1, in accordance with the coprocessor status data CPST detected at time $t_0$, puts the start control of the bus cycle to the outside based on the transfer end address or various sorts of bus cycle control signal previously obtained (previously obtained by control of micro flow baranched in the machine cycle of time $t_1$ - $t_2$) in the waiting state. The main processor 1 also suppresses the assert of the coprocessor data enable signal $\overline{CDE}$. Consequently, while the bus cycle is started by the external device 4, the coprocessor 2 is held to the state that undesirable data DATA is not outputted to the data bus 5, thereby the data DATA supplied to the data bus 5 during operation of the external device 4 is not disturbed.

If the use of the bus by the external device 4 is finished, the external device 4 puts the output state of an output buffer (not shown) for outputting the address signal or the bus cycle control signal in the high output impedance state. Subsequently at time $t_5{}'$, the external device 4 negates the hold request signal $\overline{HREQ}$.

The main processor 1 detects the negate of the hold request signal $\overline{HREQ}$ in the prescribed sampling timing, and subsequently at prescribed time $t_6{}'$, the main processor 1 negates the hold acknowledge signal $\overline{HACK}$ and starts the bus cycle for transferring the data from the coprocessor 2 to the memory 3. For example, at time $t_7{}'$ synchronous with the machine cycle after negating the hold acknowledge signal $\overline{HACK}$ or later, the main processor 1 starts the bus cycle for transferring the data. That is, at time $t_7{}'$, the main processor 1 varies the coprocessor data enable signal $\overline{CDE}$ to low level and commands the output timing of the data to the coprocessor 2, and varies the read/write signal R/$\overline{W}$ to low level and commands the write operation of the data to the memory 3. Next, the address ADRS assigning the address to which the data is to be transferred is outputted from the input/output control unit 9 to the address bus 6, and the address strobe signal $\overline{AS}$ is asserted in the timing that the address signal ADRS is fixed on the address bus 6. The coprocessor 2 responds to the assert of the coprocessor data enable signal $\overline{CDE}$, and begins to output the data DATA onto the data bus 5 in the prescribed timing synchronous with the assert timing. Thereby the memort 3 takes the data DATA fixed on the data bus 5 into the inside through a data input latch circuit (not shown) or the like. In the timing of finishing the taking, the memory 3 asserts the data complete signal $\overline{DC}$ and

writes the data DATA in the prescribed storage region indicated by the address signal ADRS.

Detecting the assert of the data complete signal $\overline{DC}$, the main processor 1 negates the address strobe signal $\overline{AS}$ in synchronizing with the machine cycle MCYC thereby the bus cycle for transferring the data is finished at time $t_8{}'$. Also the coprocessor 2 detects the assert of the data complete signal $\overline{DC}$, thereby the output operation of the data DATA is finished.

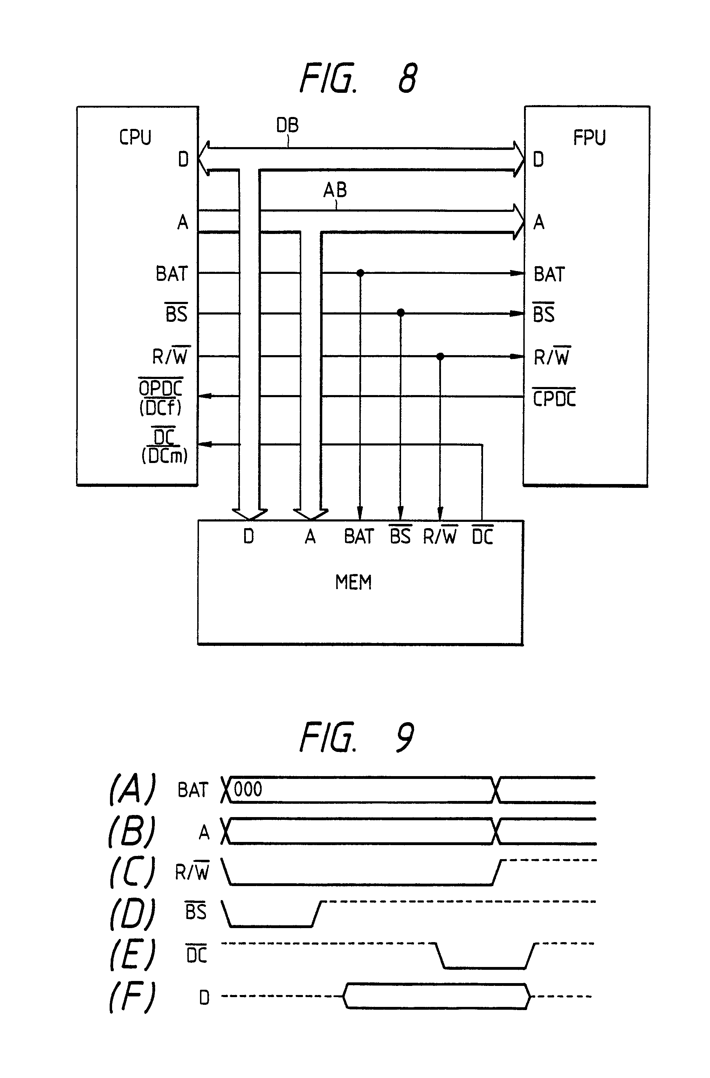

FIG. 8 is a block diagram of microcomputer system as another embodiment of the invention.

Before describing the embodiment of FIG. 8, in order to facilitate the understanding of the embodiment, microcomputer system thought by the inventor prior to the embodiment will be first described.

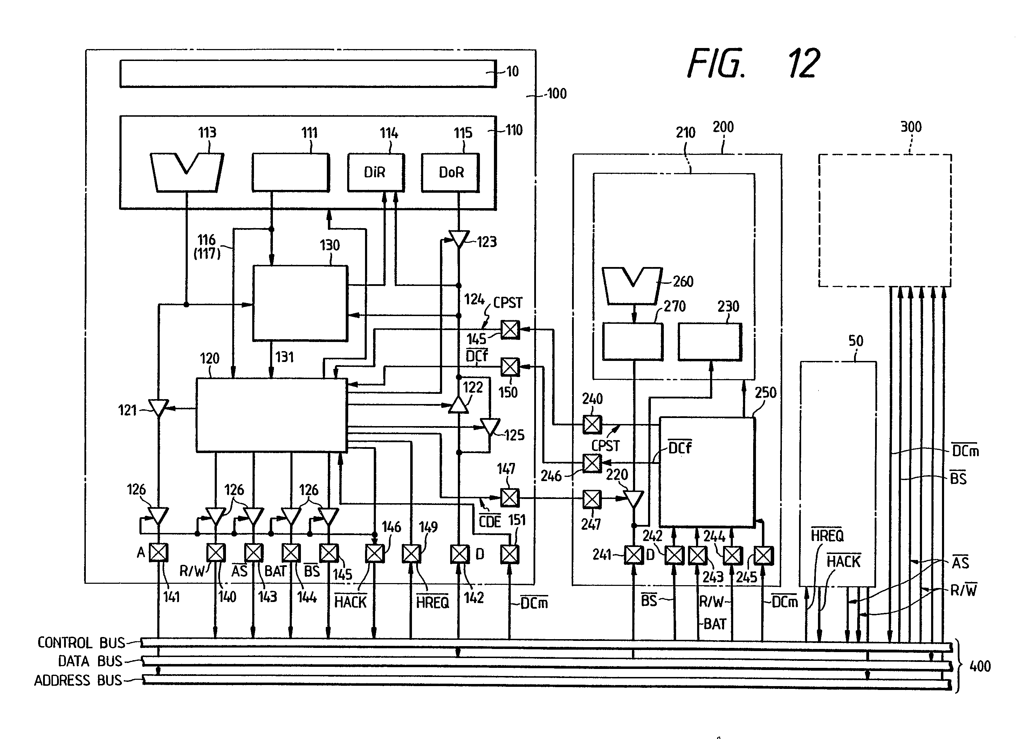

In the microcomputer system, in addition to a microprocessor CPU and a coprocessor, an external device such as a main memory is installed. In this case, if the bus access end signal outputted from the external device and the bus access end signal outputted from the coprocessor are the same, error operation may occur in that, for example, the external device is at the bus access state but the bus access end signal from the coprocessor is transmitted to the microprocessor thereby the bus access of the external device ends. In order to prevent such error operation, as shown in FIG. 11 for example, a selector circuit SEL must be installed to select which bus access end signal BF is effective among a main memory MEM as an external device and a floating point calculating processor FPU as a coprocessor, thereby constitution of the microprocessor system is complicated.

According to the embodiment, generation of the error operation as above described can be prevented, and constitution of the microcomputer system can be simplified.

In FIG. 8, CPU designates a microprocessor, and the microprocessor CPU is a general-purpose microprocessor and acts as a main processor. A floating point calculating processor FPU is a coprocessor and installed to perform calculation such as floating point calculation at high speed. A main memory MEM constitutes an external device, and stores data or program for the information processing to be processed.

Each of these devices in similar manner to the above-mentioned embodiments is composed of a semiconductor integrated circuit device, and although not particularly limited thereto, it is installed on a package substrate such as a printed board, and mutually connected by an address bus AB or a data bus formed on the printed board and mutually connected through a signal line to transmit various sorts of control signals $\overline{BS}$, BAT, R/$\overline{W}$, $\overline{DC}$ and $\overline{CPDC}$ for hand shake.

In FIG. 8, the control signal $\overline{BS}$ is signal indicating that the microprocessor CPU starts the bus access to the coprocessor FPU, the external device MEM or the like. The control signal BAT is composed of signal of three bits, and signal indicating sorts of the bus access requested to the external device MEM and the coprocessor FPU. For example, when the microprocessor CPU requests the bus cycle to the external device MEM, the control signal BAT is made (000), and when the interface with the coprocessor FPU is executed, the control signal BAT is made (110). Thus the control signal BAT indicates what bus access is requested by the microprocessor CPU. The control signal R/$\overline{W}$ is signal discriminating that the bus access performed in the present is read cycle or write cycle. The control signal $\overline{DC}$ is signal informing that the external device such as the main memory MEM takes the data on the data bus DB or the effective data is outputted from the external device onto the bus DB. The control signal $\overline{CPDC}$ is signal informing that the coprocessor such as the floating point calculating processor FPU takes the data on the data bus DB or the effective data is outputted from the coprocessor onto the data bus DB. These signals $\overline{DC}$ and $\overline{CPDC}$ become the bus cycle end signal of each device.

Next, the bus access will be described in an example of the main memory MEM as the external device and the floating point calculating processor FPU as the coprocessor shown in FIG. 8.

The bus access between the microprocessor CPU and the main memory MEM is as follows. The microprocessor CPU informs the starting of the bus access to the main memory MEM by low level of the control signal $\overline{BS}$. At the same time, the microprocessor CPU informs the address signal assigning the address A to be accessed to the address bus AB. The microprocessor CPU makes bit of the control signal BAT to be 000 (data access). The control signal R/$\overline{W}$ is made high level in the read cycle and low level in the write cycle. The main memory MEM receives each signal, and asserts the control signal $\overline{DC}$ to low level when the effective data is outputted to the data bus DB if it is read cycle, and when the data on the data bus DB is taken if it is write cycle. And then the main memory MEM indicates the end of the bus access to the microprocessor CPU.

Next, the bus access of the interface executed between the microprocessor CPU and the coprocessor FPU is as follows. The microprocessor CPU informs the starting of the interface bus access with the coprocessor FPU by low level of the control signal $\overline{BS}$ to the coprocessor FPU, and makes bit of the control signal BAT to be 110 (command transfer). Also the control signal R/$\overline{W}$ is made low level, and write cycle is indicated. The coprocessor FPU takes the data (command) D outputted from the microprocessor CPU onto the data bus DB, and then asserts the control signal $\overline{CPDC}$ to low level and indicates the end of the bus access.

The microprocessor CPU of the embodiment has terminals corresponding to the control signal $\overline{DC}$ from the external device and the control signal $\overline{CPDC}$ from the coprocessor FPU respectively. Consequently, since the control signal indicating the end of the bus cycle is distinguished in signals such as $\overline{DC}$ and $\overline{CPDC}$, the microprocessor CPU can discriminate the end of the bus cycle corresponding to respective signals. That is, the end of two sorts of bus access can be discriminated without installing the selector circuit SEL as shown in FIG. 11 on the outside. The control signals $\overline{DC}$, $\overline{CPDC}$ are shown as the data complete signals $\overline{DCm}$, $\overline{DCf}$ respectively in the embodiment of FIG. 1 - FIG. 4.

FIG. 9 (A) - (F) is a timing chart illustrating an example of the bus access between the microprocessor CPU and the main memory MEM as the external device.

As previously described, the bus cycle with such external device is started by low level of the control signal $\overline{BS}$ outputted from the microprocessor CPU, and it is finished when the main memory MEM as the external device asserts the control signal $\overline{DC}$ outputted therefrom to low level. FIG.9 (A) - (F) shows that the signal R/$\overline{W}$ is made low level and the write cycle is indicated. Consequently, when the data D being the write information on the data bus DB is taken in the main memory MEM, the main memory MEM makes the signal $\overline{DC}$ low level. The microprocessor CPU receives low level of the signal $\overline{DC}$, and finishes the bus cycle. Then, although not shown, even if the signal $\overline{CPDC}$ is early made low level by mistake, since the microprocessor CPU forms the signal BAT representing 000 (data access), the CPU itself recognizes the bus cycle with the external device. Consequently, variation of the $\overline{CPDC}$ to low level is ignored and the signal $\overline{DC}$ is varied to low level, the bus access is finished for the first time. Thereby it can be prevented that the bus access with the external device such as the memory MEM is finished by the control signal $\overline{CPDC}$ from the coprocessor FPU by mistake.

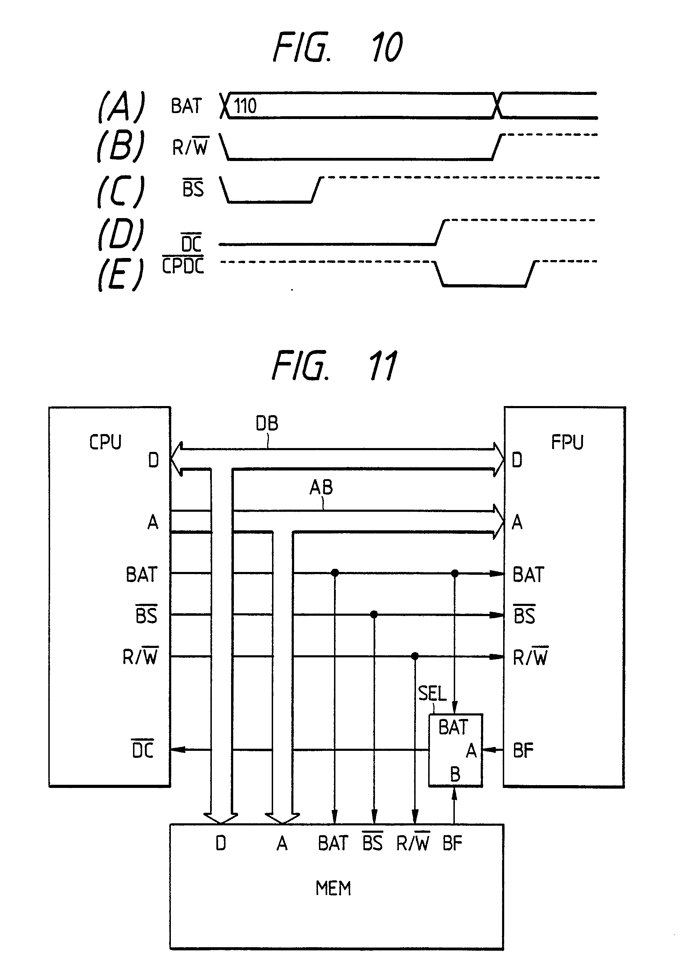

FIG.10 (A)-(E) is a timing chart illustrating an example of the interface between the microprocessor CPU and the floating point calculating processor FPU as the coprocessor.

As previously described, the bus cycle with the coprocessor is started when the control signal $\overline{BS}$ outputed from the microprocessor CPU is varied to low level, and it is finished when the floating point calculating processor FPU as the coprocessor as-

serts the contol signal $\overline{CPDC}$ outputed therefrom to low level. In FIG.10 (A)-(E), the signal BAT is made (110) and transfer of the command is indicated. When the floating point calculating processor FPU takes the data D being the command on the data bus DB in response to this, the coprocessor makes the signal $\overline{CPDC}$ low level. Receiving the low level of the signal $\overline{CPDC}$, the microprocessor CPU finishes the bus cycle. Then as shown in the figure, even if the external device makes the output signal $\overline{DC}$ low level, since the microprocessor CPU recognizes that the CPU itself is the bus cycle with the coprocessor FPU by the signal BAT being 110 (command transfer), the low level of the signal $\overline{DC}$ is ignored and the signal $\overline{CPDC}$ is made low level, thereby the bus cycle is finished for the first time. Thereby error operation does not occur in the bus access between the coprocessor FPU and the microprocessor CPU, even if the signal $\overline{DC}$ is outputted from the external device such as the main memory MEM by mistake.

FIG. 12 is a block diagram of data processing system as another embodiment of the invention. The data processing system shown in FIG. 12 comproses a micro processing unit (MPU) 100, a floating point calculating unit (FPU) 200, a main memory 300, and an external device 50 such as a direct memory access controller (DMAC). The MPU 100, the FPU 200 and the external device 50 are constituted by semiconductor integrated circuit devices different from each other. That is, regarding the MPU 100, each circuit block enclosed by dash-and-dot line is formed on one semiconductor substrate by known semiconductor integrated circuit technology, and regarding the FPU 200, each circuit block enclosed by dash-and-dot line is formed on one semiconductor substrate by known semiconductor integrated circuit technology. Also regarding the external device 50, it is constituted by each circuit element (not shown) formed on one semiconductor substrate. On the contrary, the main memory 300 is composed of a plurality of dynamic RAMs and logic means. The logic means are used to form timing signals required for operating the dynamic RAMs. These dynamic RAMs and logic means are constituted by a plurality of semiconductor integrated circuit devices. These devices are connected to each other through a bus 400.

The MPU 100 comprises an execution unit 110, a bus interface unit 120, a contained cache memory 130 and a control unit 10. The MPU 100 is connected to an address bus through an external terminal A141 for address signal, and to a data bus through an external terminal D142 for data. Also the MPU 100 as shown in FIG. 12 is connected through an external terminal $\overline{AS}$ 143 for address strobe signal, an external terminaL R/W 140 for read/write indication signal, an external terminal BAT 144 for bus access type data, an external terminal $\overline{BS}$ 145 for bus start signal, an external terminal $\overline{HACK}$ 146 for hold acknowledge signal and an external terminal $\overline{HREQ}$ 149 for hold request signal to a control bus. In FIG. 12, although each of the address signal A, the data D and the bus access type data BAT is shown by one signal for simplifying the drawing, it is actually constituted by a plurality of signals.

The main memory 300 supervises the bus start signal $\overline{BS}$ on the control bus, and this signal is asserted thereby the operation is started. The main memory 300 also supervises the address strobe signal line $\overline{AS}$ on the control bus, and this signal is asserted thereby fixing of the address signal A on the address bus is recognized and read operation or write operation is started. In other words, when the address strobe signal $\overline{AS}$ is asserted, if the read/write indication signal line R/W indicates the read operation, data of address indicated by the address signal A on the address bus is outputted from the main memory 300 to the data bus. The read data is supplied through the data bus to the data terminal D142 of the MPU 100 for example. On the contrary, if the read/write indication signal R/W indicates write operation, data on the data bus, for example, data transmitted through the data terminal D142 of the MPU 100 is written in a memory of address shown by the address signal A on the address bus.

The execution unit 110 comprises an execution control circuit 111 and an arithmetic calculating circuit 112. The arithmetic calculating circuit 112 is composed of a calculating device 113 for calculating memory address to estimate desired address in the main memory 300 or the like, a register DIR 114 for holding data read from the main memory 300 or the like, and a register DOR 115 for holding data to be outputted to the main memory 300 or the like.

The control unit 10 fetches macro instruction, and controls the execution unit 110 or the like as hereinafter described in accordance with operation code of the macro instruction. When the execution unit 110 performs access to the memory 300, the execution unit 110 outputs start command signal 116 to command the starting of the bus cycle from the execution command circuit 111 to the bus interface unit 120, and issues various sorts of control signals (not shown) for controlling the contained cache memory 130 and the bus interface unit 120. Then the execution control circuit 111 outputs command signal to form the read/write indication signal R/W to the bus interface unit 120. Based on the command signal, the bus interface unit 120 forms the read/write indication signal R/W. When the bus interface unit 120 receives the bus cycle start signal 116, the bus interface unit 120 asserts the bus start signal $\overline{BS}$ in response to the bus cycle start signal 116, and enables an address buffer 121 and outputs the memory address obtained by the calculating device 113 to the address bus. Then the bus interface unit 120 outputs the read/write indication signal R/W, and asserts the address strobe signal $\overline{AS}$ in timing delayed from the enable timing of the address buffer 121.

If the bus cycle started in this manner is read cycle, the bus interface unit 120 enables a data input buffer 122. Thereby data outputted from the main memory 300 to the data bus is read in the MPU 100, and set to the data input register DIR. Although not particularly limited thereto, in this case, a data output buffer 125 and a buffer 123 are disabled by control signal from the bus interface unit 120.

If the bus cycle is write cycle, the bus interface unit 120 enables the buffer 123 and the data output buffer 125. Thereby data of the data output register DOR 115 is outputted to the internal data bus 124 within the MPU, and also outputted through the output buffer 125 to the data bus. In this case, although not particularly limited thereto, the input buffer 122 is disabled.

The contained cache memory 130 acts in response to the bus cycle start signal 116. If the bus cycle is read cycle, the cache memory 130 compares the above-mentioned memory address with address held within the cache memory. If both are coincident, the cache memory 130 outputs suppression signal 131 for suppressing the external bus cycle to the bus interface unit 120. In response to the suppression signal 131, the bus interface unit 120 does not assert the bus start signal $\overline{BS}$ for example, although the bus cycle start signal 116 is supplied. Thereby the bus interface unit 120 does not perform access, but sets the data read from the cache memory 130 to the data input register DIR 114.

If the above-mentioned memory address is not coincident with the address held within the cache memory 130, the cache memory 130 does not output the suppression signal 131 of the bus cycle. Thereby the bus interface unit 120 performs normal bus access to the memory 300 as already described.

On the contrary, if the bus cycle is write cycle, the contained cache memory 130 does not output the suppression signal 131 to suppress the external bus cycle irrespective of coincidence/uncoincidence of the memory address with the address held in the cache memory 130. Thereby the bus interface unit 120 performs normal bus access to the main memory 300. However, in the embodiment, the memory address is compared with the address held in the cache memory 130, and if both are coincident, content of the cache memory 130 is updated using the write data outputted on the internal data bus 124 in the MPU 100. Coincidence of content of prescribed address in the main memory 300 with content of prescribed address in the cache memory 130 corresponding to the prescribed address in the former can be guaranteed by the above-mentioned processing.

Next, data transfer between the coprocessor (FPU 200 in this embodiment) and the main memory will be described.

The FPU 200 comprises a floating point calculating unit 210, a data output buffer 220 and a bus control unit 250. The floating point calculating unit 210 comprises a calculating device 260, a data output register 270 and a data input register 230. The data output buffer 220 is connected to the data bus through an external terminal D 241 for data. The bus control unit 250 is supplied with bus start signal $\overline{BS}$, bus access type data BAT and read/write indication signal R/W through external terminals 242 ~ 244 from the control bus. The bus control unit 250 forms coprocessor status data CPST described in the previous embodiment, and the data CPST is supplied through external terminals 240 and 148 to the bus interface unit 120 in the MPU 100.

Transfer of data from the main memory 300 to the FPU 200 will be first described. Since the start of the data transfer is also performed in synchronizing with the MPU 100, the bus cycle start signal 116 is outputted from the execution control unit 111 in the MPU 100. At the same time, control signal 117 representing data transfer cycle to the FPU 200 is also outputted from the execution control unit 111. If the control signal 117 is asserted, the contained cache memory 130 is controlled not to output the suppression signal 131 of the external bus cycle even if the memory adress is coincident with the address held in the cache memory. As a result, the bus cycle to the main memory 300 is always started, and data which is read from the main memory 300 and outputted on the data bus can be transmitted to the FPU 200. When the data is transferred from the memory 300 to the FPU 200, the bus access type data BAT representing the data transfer is outputted from the bus interface unit 120. On the other hand, as clearly understood from the description in the previous embodiment, the main memory outputs the data to the data bus, and if the outputted data is fixed on the data bus, the main memory asserts the data complete signal $\overline{DCm}$. When the bus access type data BAT represents the data transfer and the data complete signal $\overline{DCm}$ is asserted, the bus control unit 250 in the FPU 200 controls the data input register 230 so that the data on the data bus is taken in the data input register 230. As a result, the data outputted from the main memory 300 is taken directly to the data input register in the FPU 200.

Next, transfer of data from the FPU 200 to the main memory 300 will be described. Since the start of the data transfer is also performed in synchronizing with the MPU 100, the bus cycle start signal 116 is outputted from the execution control unit 111 of the MPU 100. At the same time, signal 117 representing the data transfer cycle to the FPU 200 is also outputted. If the signal 117 is asserted and the command signal outputted from the execution control unit 111 represents write, in response to this, the bus interface unit 120 outputs the read/write indication signal R/W in write state. However, the bus interface unit 120 does not enable the data output buffer 125, but outputs the signal $\overline{CDE}$ indicating the data output from the coprocessor through the external terminal 147. The signal $\overline{CDE}$ is transmitted through the external terminal 247 to the data output buffer 220 in the FPU 200. The signal $\overline{CDE}$ is asserted, thereby the data output buffer is enabled and the data of the data output register 270 is outputted to the data bus. Then the data input buffer 122 in the MPU 100 is controlled to be enabled by the bus interface unit 120. Thereby the data to be written in the main memory 300 by the FPU 200 is taken into the data bus 124 within the MPU 100. The contained cache memory 130 compares the memory address with the address held in the cache memory in similar manner to normal write cycle. If both are coincident, content of the cache memory is updated using the write data taken into the data bus 124 within the MPU 100 through the data input buffer 122. Coincidence of content of the main memory with content of the cache memory can be guaranteed also in the data transfer operation from the coprocessor to the main memory by the above-mentioned processing.

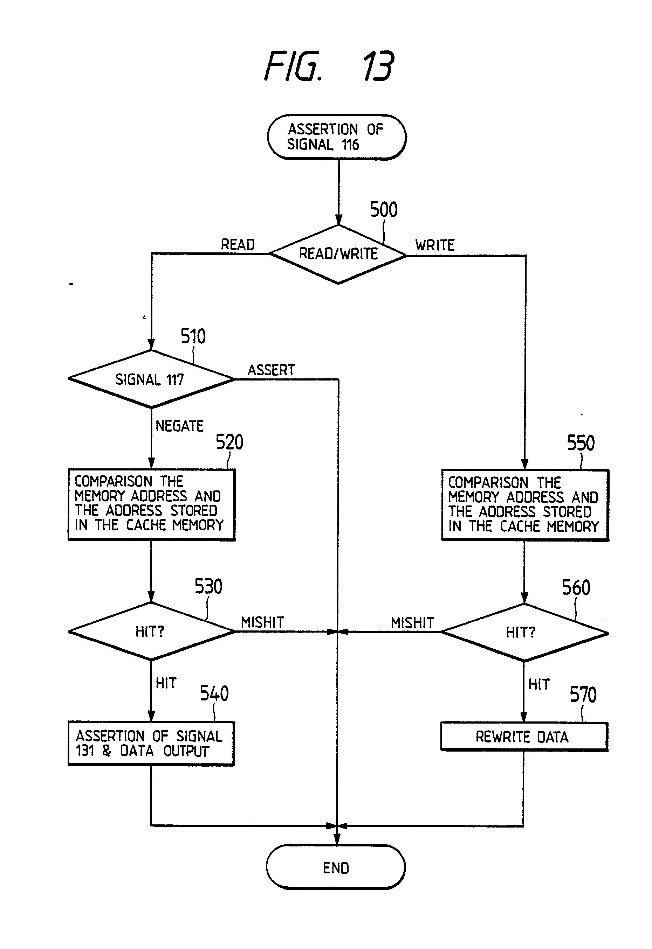

FIG. 13 is a flow chart of control procedure of the contained cache memory 130. That is, the contained cache memory 130 is controlled by the execution control circuit 111 as hereinafter described. Operation of the contained cache memory 130 is started by the bus cycle start signal 116. The control procedure will be described based on the flow chart.

Processing 500 : When the operation is started by the bus cycle start signal 116, if the bus cycle is read cycle, processing 510 is subsequently executed. On the contrary, if the bus cycle is write cycle, processing 550 is subsequently executed.

Processing 510 : If signal 117 representing the data transfer to the FPU is asserted, the processing is finished. On the contrary, if the signal 117 is negated, processing 520 is subsequently executed.

Processing 520 : Memory address is compared with address held in the cache memory.

Processing 530 : As a result of comparison of address performed in processing 520, if coincident (hit), processing 540 is subsequently executed. If not so, the processing is finished.

Processing 540 : External bus cycle suppression signal 131 is asserted, and read of data is performed from the cache memory to data input register DiR.

Processing 550 : Memory address is compared with address held in the cache memory.

Processing 560 : As a result of comparison of address, if coincident (hit), processing 570 is subsequently executed. If not so, the processing is finished.

Processing 570 : Using the write data outputted to the internal data bus in the MPU, data in the coincident address within the cache memory 130 is updated.

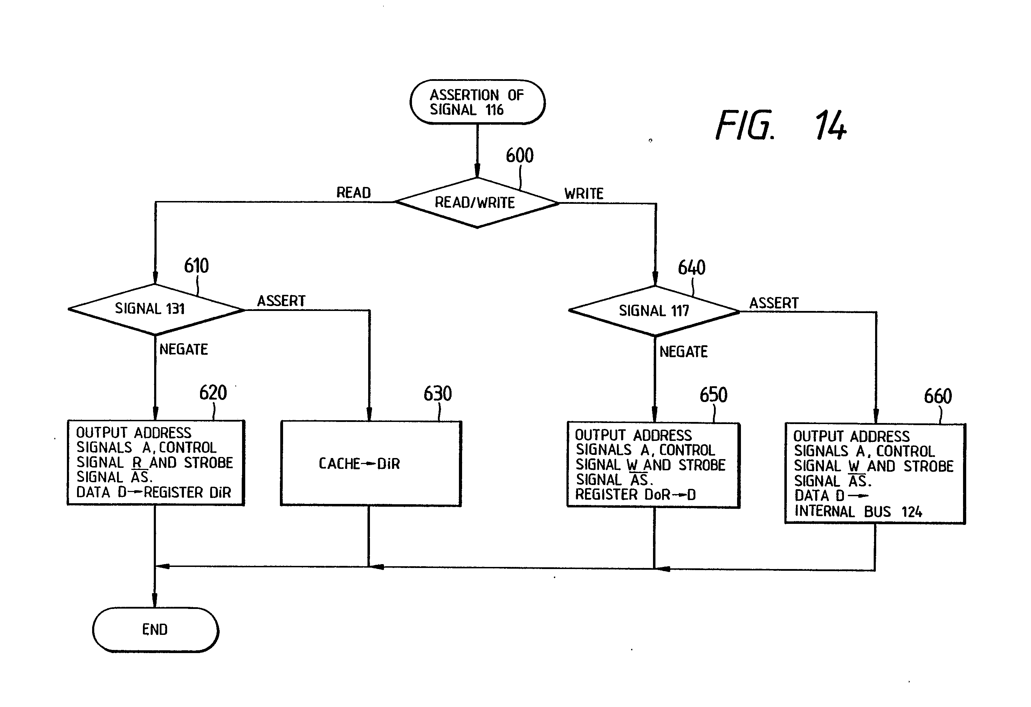

FIG. 14 is a flow chart of control procedure of the bus interface unit 120. The bus interface unit 120 is also controlled by the execution control circuit 111 as hereinafter described. Operation of the bus interface unit 120 is also started by the bus cycle start signal 116. The control procedure will be described based on the flow chart.

Processing 600 : When the operation is started by the bus cycle start signal 116, if the bus cycle is read cycle, processing 610 is subsequently executed. On the contrary, if the bus cycle is write cycle, processing 640 is subsequently executed.

Processing 610 : If the external bus cycle suppression signal 131 is asserted, processing 630 is subsequently executed. On the contrary, if the suppression signal 131 is negated, processing 620 is subsequently exeucted.

Processing 620 : Address signal A, read indication signal R (state that read/write indication signal R/W represents read), address strobe signal $\overline{AS}$ and the like are outputted on the bus 400, and data read from the main memory 300 is taken in data input register DIR 114.

Processing 630 : Data read from the cache memory 130 is set to the data input register DIR 114.

Processing 640 : If signal 117 representing the data transfer to the FPU 200 is asserted, processing 660 is subsequently executed. If the signal 117 is negated, processing 650 is subsequently executed.

Processing 650 : Address signal A, write indication signal W (state that read/write indication signal R/W represents write), address strobe signal $\overline{AS}$ and the like are outputted, and data within the data output register DOR is outputted as write data to the data bus.

Processing 660 : Address signal A, write indication signal W, address strobe signal $\overline{AS}$ and the like are outputed on the bus 400, and signal $\overline{CDE}$ 126 is outputted and data from the FPU 200 is outputted on the data bus. At the same time, the data input buffer 122 of the MPU 100 is enabled, and data outputted from the FPU 200 is taken as the write data into the data bus 124 within the MPU 100.

In this embodiment, although not particularly limited thereto, control means for controlling the cache memory 130 and control means for controlling the bus interface unit 120 are internally installed in the execution control circuit 111. However, these two control means may be constituted, of course, by one control means.

In the data processing system of this embodiment in similar manner to the previous embodiment shown in FIG. 4 through FIG. 7, before the bus cycle for transferring the data from an FPU 200 to the main memory 300 is started by the MPU 100, the hold request signal $\overline{HREQ}$ supplied from the external device 50 to the MPU 100 through the control bus is sampled. That is, the hold request signal $\overline{HREQ}$ is sampled by the MPU 100 in the prescribed timing. If the hold request signal $\overline{HREQ}$ is asserted before the bus cycle for the data transfer is started, the bus interface unit 120 responds to this and inhibits the assert of the signal $\overline{CDE}$ (coprocessor data enable signal) as described in the previous embodiment, and asserts the hold acknowledge signal $\overline{HACK}$. Thereby the output buffer 126 for outputting the address signal A or the like is disabled, and its output impedance becomes high. On the contrary, if the hold request signal $\overline{HREQ}$ is asserted after the bus cycle for the data transfer is started, the bus interface unit 120 asserts the coprocessor data enable signal $\overline{CDE}$, and inhibits the assertion of the hold acknowledge signal $\overline{HACK}$. Thereby the output buffer 126 is enabled, and the address signal A or the like is outputted on the bus 400. Thus in similar manner to previous embodiment, arbitration between the external device 50 and the MPU 100 is performed also in this embodiment. The hold request signal $\overline{HREQ}$ is supplied also to the execution unit 110 through the bus interface unit 120.

In this embodiment also in similar manner to the previous embodiment shown in FIG. 8 through FIG. 10, the MPU 100 is provided with the external terminal 150 for receiving the data complete signal $\overline{DCf}$ ( $\overline{CPDC}$ ) supplied from the coprocessor 200, and the external terminal 151 for receiving the data complete signal $\overline{DCm}$ ( $\overline{DC}$ ) supplied from the

main memory 300 or the like. These external terminals 150, 151 are connected to the bus interface unit 120. Since the bus interface unit 120 forms the bus access type data BAT indicating sorts of bus access when the bus access is performed, the bus interface unit 120 discriminates whether the supplied data complete signal is suited to the bus access in the present or not, and if it is suited, the bus access is finished. Consequently, in the bus interface unit 120, although not particularly limited thereto, means for detecting whether state indicated by the bus access type data BAT and state represented by assert, negate of the data complete signals $\overline{DCf}$, $\overline{DCm}$ are suited or not is installed.

In the specification, terms "assertion" and "negation" are widely used. This is done to avoid confusion when dealing with a mixture of "active-low" and "active-high" signals. The term assert or assertion is used to indicate that a signal is active or true independent of whether that voltage is low or high. The term negate or negation is used to indicate that a signal is inactive or false.

The above-mentioned embodiments have have following effects.

First, regarding the embodiment shown in FIG. 1 through FIG. 3, typical effects will be described.

(1) When data DAT outputted from the coprocessor 2 is stored in the main memory, the main processor 1 to control bus cycle required therefor forms information required for the operation, that is, information regarding sorts of the bus access, such as address signal ADRS, size information of data to be transferred, sorts of data of transfer object or transfer direction, and the interface controller 13 included in the main processor 1 can know fixed state of various sorts of interface signal supplied thereto from the outside, for example, data DAT outputted from the coprocessor 2 by the data complete signals $\overline{DCf}$, $\overline{DCm}$ on the data bus, and further the taking state of the data DAT by the main memory 3. On account of these conditions, the interface controller 13, based on various sorts of interface signals supplied thereto from the outside and control signal supplied from the instruction control unit 6, controls the cache controller 12 in synchronizing with the bus cycle corresponding to control of the bus cycle. Thereby the data DAT outputted from the coprocessor 2 to the data bus 4 is taken also in address of the operand cache memory 11 corresponding to the address ADRS outputted from the main processor 1 for the access of the main memory 3 in the same machine cycle.

(2) According to effects of (1), when the operation result of the coprocessor 2 is stored in the main memory 3, the data DAT outputted from the coprocessor 2 is taken directly in the main memory 3 through the data bus 4, thereby data DAT outputted from the coprocessor 2 can be efficiently stored in the memory 3.

(3) According to effects of (1), when the operation result of the coprocessor 2 is stored in the main memory 3, the data DAT outputted from the coprocessor 2 is taken directly in the main memory 3 through the data bus 4, and also taken in the operand cache memory 11 contained in the main processor 1 in nearly same timing or same machine cycle. When the data DAT outputted from the coprocessor 2 is stored in the main memory 3, the same data DAT is held to address in the cache memory 11 and the main memory 3 corresponding to each other, thereby matching property of data can be held.

(4) According to respective effects, the operation efficiency of the data processing system as a whole can be improved, and reliability of the data processing operation can be improved.

Typical effects obtained from the embodiment shown in FIG. 4 through FIG. 7 are as follows.

(1) Data transfer from the memory 3 to the coprocessor 2 is performed in that the read data of the memory 3 accessed in accordance with the bus cycle started by the main processor is taken in the coprocessor 2 based on the assert timing of the data complete signal $\overline{DC}$ outputted from the memory 3. Also in the data transfer from the coprocessor 2 to the memory 3, the main processor 1 supplies the coprocessor 2 with the coprocessor data enable signal $\overline{CDE}$ so that the output timing of the data of the data of the coprocessor 2 to be transferred is synchronized with the write operation of the memory 3 controlled by the bus cycle started by the main processor 1. Thus the data to be transferred between the coprocessor 2 and the memory 3 can be transferred in accordance with the bus cycle controlled by the main processor 1 through the data bus 5 between both units directly.

(2) Bus intervention between the main processor 1 and the external device 4 is performed by the main processor 1. During the bus open period to the external device 4, in interlock with this, the bus intervention to the external device 4 is performed so that command of the output start to the coprocessor 2 by the coprocessor data enable signal $\overline{CDE}$ is also suppressed. That is, when the data is transferred directly from the coprocessor 2 to the memory 3, the main processor 1 samples the hold request signal $\overline{HREQ}$ in the timing before starting the bus cycle therefor. Thereby when the bus open request of the external device 4 is detected, even if the main processor adopts the inner state to enable command of the data output start timing to the coprocessor 2 before the detection, the bus open request has the priority and the bus right is abandoned, and the main processor maintains the coprocessor data enable signal $\overline{CDE}$ to the negate state. After the bus open request is finished, the main processor asserts the coprocessor data enable signal $\overline{CDE}$ and supplies the coprocessor 2 with the output timing of data, and the bus cycle to transfer the data of the coprocessor 2 to the memory 3 is started. Consequently, when the data is transferred directly from the coprocessor 2 to the memory 3, if the bus open request is issued from the external device 4, it is previously prevented that undesired data from the coprocessor 2 is outputted on the data bus in spite of such request having the high priority, thereby the bus intervention can be performed accurately.

According to effects of (2), the coprocessor 2 need not supervise independently the moving of the bus right performed by the main processor 1.

(4) When data is transferred between the coprocessor 2 and the memory 3, in the procedure of the transfer method of the prior art that the data to be transferred is once taken in the main processor 1 and then the taken data is transferred to the opposite unit, such case may occur that the external device 4 must be moved during the transfer operation. On the contrary, in the embodiment, according to effects of (1) and (2), the bus intervention is performed between the main processor 1 and the external device 4 without producing the moving of the bus right as above described. When the main processor becomes the bus master by this bus intervention, the data to be transferred between the coprocessor 2 and the memory 3 is directly transferred through the data bus 5. Thereby when the data is transferred, increase of the moving number of the bus right can be suppressed.

(5) According to effects of (4), the interface between the main processor 1 and the coprocessor 2 is made high speed, and further the operation efficiency of the data processing system can be improved.

Typical effects obtained by the embodiment shown in FIG. 8 through FIG. 10 are as follows.

(1) In the microcomputer system including the coprocessor, the microprocessor is provided with a terminal for exclusively receiving bus access end signal (data complete signal) from the coprocessor, and end signals from other external devices except for the coprocessor are distinguished. Thereby such error operation can be prevented that the bus cycle between the microprocessor and the coprocessor (or external device) is finished by the end signal from the external device ( or coprocessor).

(2) Since the exclusive terminal is installed, a circuit such as a selector need not be installed on the outside, thereby the system can be simplified.

Regarding the embodiment shown in FIG. 12 through FIG. 14, effects thereof can be easily understood from the above description and therefore shall not be mentioned here.

The invention by the inventor has been described specifically based on the embodiments. However, the invention is not limited to the description, and various modifications may be done without departing from the spirit of the invention.

For example, in the embodiment shown in FIG. 1 through FIG. 3, the control signal of the bus cycle by the main processor is not limited to the embodiment and modification may be done. For example, the data complete signal $\overline{DCm}$ outputted from the memory may be supplied to the main processor only. Also in the embodiment, when the operand is transferred from the coprocessor to the main memory, the data is taken into the main processor. However, when the operand is transferred from the coprocessor to the main processor reversely, the bus cycle may be generated so that the data can be stored in the main memory. When the operand is transferred from the coprocessor to the main memory and the data is taken into the main processor, in the embodiment, the data is supplied to the operand cache memory included in the main processor. However, at the same time the data may be supplied also to the data register in the main processor, or may be supplied to the data register only. In the coprocessor system of the embodiment, the main processor, the coprocessor and the main memory are typically shown. However, in addition to the above-mentioned units, various sorts of module capable of becoming the bus master or slave module may be included as peripheral device.

For example, in the embodiment shown in FIG. 4 through FIG. 7, the description has been performed in the case that the main processor is interfaced with one coprocessor, but interface may be performed with a plurality of coprocessors. In this case, selection of the coprocessors may be performed in that the main processor outputs address assigned to each coprocessor. The external device is not limited to the interrupt controller or the direct memory access controller, but may be changed to module other than the above unit capable of becoming the bus master. The external device commonly possessing the address bus or the data bus to the main processor is not limited to one. When a plurality of external devices exist, a bus arbiter to perform intervention between the external devices is installed, and the main processor may perform the bus intervention with the external devices through the bus arbiter. The second bus slave module such as the coprocessor is not limited to coprocessor only. Further, the first bus slave module accessed by the processor such as the main processor is not limited to the memory, but may be changed to other devices such as an input/output circuit. Consequently, control signal to command the second bus slave module of the data output start timing to the first bus slave module is not limited to the coprocessor data enable signal $\overline{CDE}$.

In the embodiment shown in FIG. 8 through FIG. 10, in addition to the floating point calculating processor, any coprocessor may be used which is closely coupled with the main processor and expands the function and the processing capacity of the main processor, such as decimal operation, trigonometry or the like. The microprocessor as the main processor may be any processor having data processing function in the form of the general-purpose microprocessor. The external devices include, in addition to the main memory, a read only memory to store program, a magnetic disk memory, a console and other input/output device.

In the embodiment shown in FIG. 12 through FIG. 14, although the data bus 124 in the MPU acts as bidirectional bus at the read/write state, the data bus for read and the data bus for write may be individually provided without departing scope of the invention. Also in the embodiment, although address to retrieve the contained cache memory is physical address, such data processor may be used that the MPU contains a memory management unit, and the contained cache memory is accessed in logic address and the external main memory is accessed in phisical address without departing scope of the invention. Also in the embodiment, although data is updated only at hit state to the contained cache memory, all write data may be written in the contained cache memory. Further, the write data may be written in the contained cache memory at the data write state to special region such as stack area.

In the description regarding FIG. 1 through FIG. 3, the data processing system including the main processor such as the microprocessor where the cache memory is formed on the same semiconductor substrate has been mainly described. However, the invention is not limited to this, but may be widely applied to various sorts of data processing system including computers of medium or small type and further computers of large type.

In the invention disclosed in FIG. 1 through FIG. 3, effects obtained by typical examples will be briefly described as follows.

When the main processor commands the output of data to the coprocessor, operation of taking the output data of the coprocessor into the inner circuit block such as the cache memory and the control of the memory cycle for transferring the output data to the memory can be performed simultaneously. Consequently, when the operation result of the coprocessor is stored in the memory, the data outputed from the coprocessor is taken directly in the memory through the data bus and also taken in the cache memory contained in the main processor. Thereby the data outputted from the coprocessor can be stored in the memory efficiently, and when the data outputted from the coprocessor is stored in the memory, the data held commonly by the cache memory and the main memory with respect to the same address can maintain the matching property.

In the description regarding FIG. 4 through FIG. 7, the bus intervention by the main processor in the data transfer between the coprocessor and the memory has been mainly described. However, the invention is not limited to this, but may be applied to the bus intervention in other system. The invention disclosed typically in FIG. 4 through FIG. 7 can be applied at least to such system that the processor controls transfer of the data between a plurality of bus slave modules.

Effects obtained by the invention disclosed typically in FIG. 4 through FIG. 7 will be briefly described as follows. In synchronizing with the bus cycle controlled by the processor, the output data of the second bus slave module can be transferred directly to the first bus slave module, and the processor performs the bus intervention so that during the bus open period corresponding to the bus open request from module other than the above-mentioned processor capableof becoming the bus master, command of the data output start timing to the second bus slave module is suppressed in response to the bus open request. Thereby based on the control of the processor, in the data transfer from the second bus slave module to the first bus slave module, the bus intervention to the module to become the bus master in that time can be performed accurately, and increase of the moving number of the bus right is suppressed and the operation efficiency of the system can be improved.

The invention disclosed typically in FIG. 8 through FIG. 10 can be widely applied to the microcomputer system including the main processor and the coprocessor. Effects obtained by the invention disclosed typically in the embodiment will be briefly described as follows. In the microcomputer system including the coprocessor, the exclusive terminal is provided to perform transfer of the bus access end signal between the coprocessor and the microprocessor, and the access end signal from the external device other than the coprocessor is distinguished from the access end signal from the coprocessor. Thereby without installing a special external device, such error operation that the bus cycle to the coprocessor (or external device) is finished by the end signal from the external device (or coprocessor) can be prevented.

According to the invention disclosed typically in FIG. 12 through FIG. 14, regarding the MPU containing the cache memory, during the read cycle started to transfer the data to the coprocessor, read from the contained cache memory is inhibited and read is performed always from the main memory through the bus line, thereby the bus cycle of one time can transfer the data to the coprocessor.

Also when data is transferred from the coprocessor, in spite of the output of write as the read/write indication signal of the bus, if the data on the bus is taken into the MPU and the cache memory in the MPU is retrieved and hit is performed, the content of the cache memory is updated using the taken data, thereby the coincidence of the main memory with the cache memory can be held.

According to the above constitution, since the data transfer to the coprocessor can be realized by the bus cycle of one time also regarding the MPU containing the cache memory, overhead of the data transfer can be reduced and perfomance of the processing using the coprocessor can be improved.

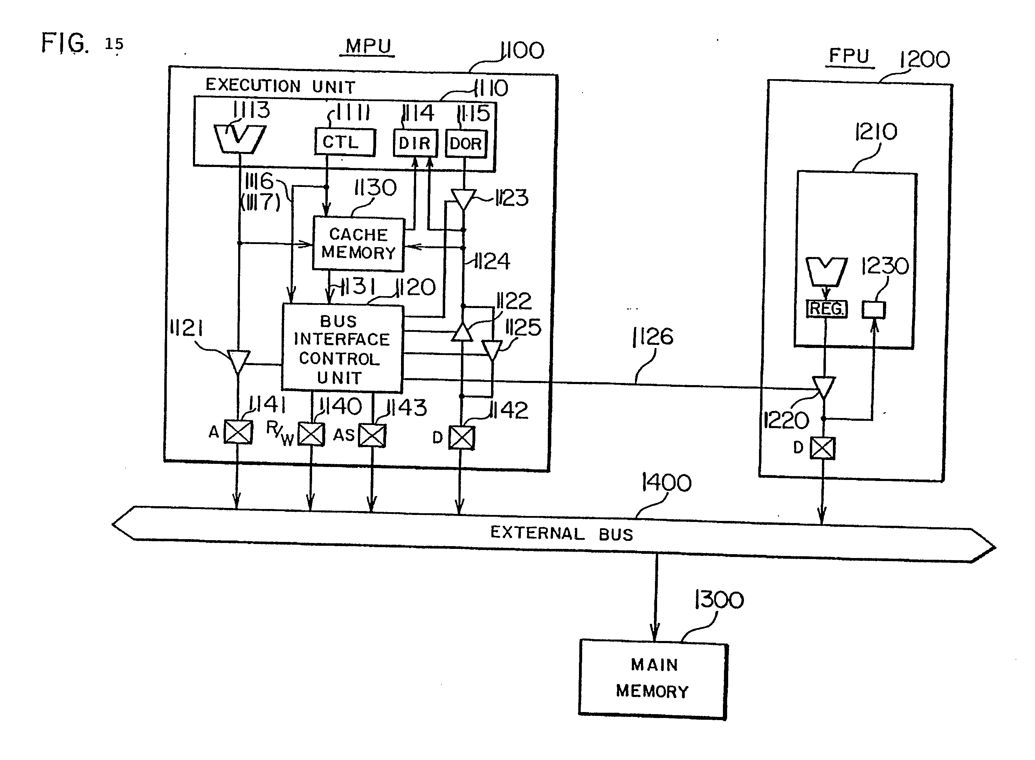

Fig.15 shows a configuration of one embodiment of the data processing system of the present invention. The data processing system comprises a microprocessing unit (MPU) 100, a floating point arithmetic unit (FPU) 1200 which is a coprocessing unit, and a main memory 1300, and they are interconnected through an external bus 1100 The MPU 1100 comprises an execution unit 1100 a bus interface unit 1120-1125 and a built-in cache memory 1130, and they are connected to the bus 1400 through an address strobe signal line (AS) 1143, a read/write request signal line (R/W) 1140, an address signal line (A) 1141 and a data signal line (D) 1142.

As will be explained later in detail, the bus interface unit (1120-1125) comprises a bus interface control unit 1120, an address output buffer 1121, a data input buffer 1122, an internal data bus output buffer 1123, an internal data bus 1124 and a data output buffer 1125.

A cache memory 1130 and the main memory 1300 are accessed by a memory address generated by an address calculation arithmetic unit 1113 of the execution unit 1110.

In transferring data with the coprocessor 1200, an execution control circuit 1111 of the execution unit 1110 generates a coprocessor data transfer request signal 1117 and an external bus cycle start signal 1116 in response to an instruction requesting the data transfer.

In transferring data to the coprocessor, the bus interface unit 1120-1125 of the microprocessor 1100 requests to read data from one of the cache memory 1130 and the main memory 1300 to the external bus 1400 in response to the memory address, the coprocessor data transfer request signal 1117 and the external bus cycle start signal 1116 so that the data read onto the external bus 1400 can be transferred to the coprocessor 1200 in one bus cycle.

In one aspect of the present invention, when data is to be transferred from the coprocessor 1200 to main memory 1300 through the external bus 1400, the transfer data on the external bus 1400 is written, through the bus interface units 1122 and 1124, to an address location of the cache memory 1130 corresponding to the memory address generated by the address calculation arithmetic unit 1113 of the execution unit 1110.

On the other aspect, in another aspect of the present invention, when a data is to be transferred from the coprocessor 1200 to the main memory 1300 through the external bus 1400, the data at the address location of the cache memory 1130 corresponding to the memory address generated by the address calculation arithmetic unit 1113 of the execution unit 1110 is purged. In the next bus cycle, when the same memory address as the previous memory address is generated by the address calculation arithmetic unit 1113, the data read from the main memory 1300 is written into the address location of the cache memory 1130 corresponding to the above memory address, through the external bus 1400 and the bus interface units 1122 and 1124.

Accordingly, in any of the above cases, consistency of the data in the main memory 1300 and the cache memory 1130 is maintained.

The main memory 1300 watches the address strobe signal line (AS) 1143 on the external bus 1400 and starts the operation when the signal 1143 is asserted. If the read/write request signal line (R/W) 1140 is in the read mode when the AS 1143 is asserted, the data at the address designated by the address line (A) 1141 is read from the main memory 1300 and it is supplied to the data line (D) 1142. On the other hand, when the R/W 1140 is in the write mode, the data on the data line (D) 1142 is written into the memory cells of the main memory 1300 at the address designated by the address line (A) 1141.

The execution unit 1110 comprises an execution control circuit 1111, an arithmetic unit 1113 for calculating a memory address, a register (DIR) 1114 for holding data read from the memory and a register (DOR) 1115 for holding data to be supplied to the memory.

When the execution unit 1110 accesses the main memory 1300, it produces from the execution control circuit 1111 to the bus interface control unit 1120 a start request signal 1116 for the external bus cycle. When the bus interface control unit 1120 receives the external bus cycle start signal 1116, it enables the address output buffer 1121 to supply the memory address to the bus 1400 and produces the read/write request signal (R/W) 1140 to assert the address strobe signal (AS) 1143.

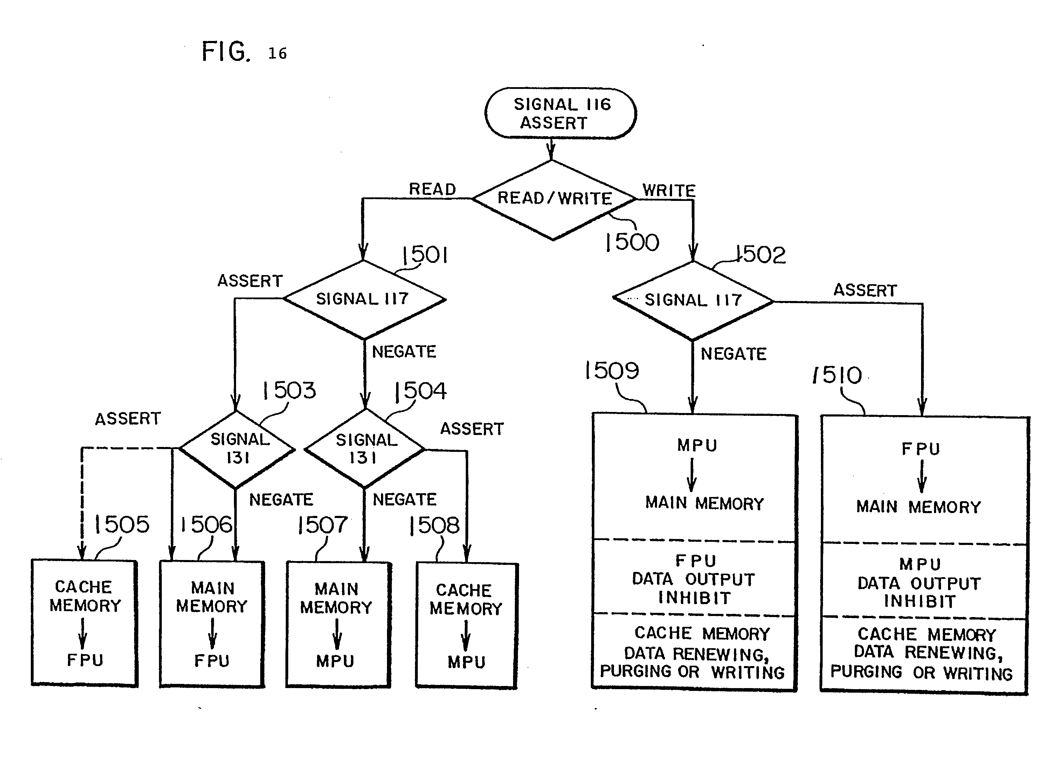

When the bus cycle is in the read cycle, the bus interface control unit 1120 enables the data input buffer 1122 to read the data supplied from the main memory to the bus 1400 and set it in the data input register (DIR) 1114 (see steps 1500, 1501, 1504 and 1507 of Fig. 16).

When the bus cycle is in the write cycle, the bus interface control unit 1120 enables the internal data bus output buffer 1123 to supply the data of the data output register DOR 1115 to the internal data bus of the MPU, and enables the data output buffer 1125 to supply the data to the bus 1400 (see steps 1500, 1502 and 1509 of Fig. 16).

The built-in cache memory 1130 is activated by the external bus cycle start signal 1116. When the bus cycle is in the read cycle, it compares the memory address with the stored address in the cache memory, and if they are equal (cache hit), it produces an external bus cycle inhibit signal 1131 to the bus interface control unit 1120. The bus interface unit (1120-1125) does not access the main memory 1300, and the data read from the cache memory 1130 is set into the data input register (DIR) 1114 (see steps 1500, 1501, 1504 and 1508 of Fig. 16).

If the addresses are not equal (cache mishit), the cache memory 1130 does not produce the bus cycle inhibit signal 1131 and the bus interface unit 1120-1125 makes normal access to the main memory 1300 (see step 1507 in Fig. 16).

On the other hand, when the bus cycle is in the write cycle, the built-in cache memory 1130 does not produce the external bus cycle inhibit signal 1131 without regard to whether the addresses are equal or not, and the bus interface unit (1120-1125) makes normal access to the main memory 1300 (see steps 1500, 1502 and 1509 in Fig. 16). However, if the memory address is equal to the stored address in the cache memory, the content of the cache memory is updated by the write data on the internal data bus 1124 of the MPU. In this manner, the basic consistency of the content of the main memory and the content of the cache memory is assured.

The data transfer between the coprocessor (FPU 1200 in the present embodiment) and the main memory 1300 or cache memory 1130, which is a heart of the present invention, is now explained.

The FPU 1200 comprises a floating point arithmetic unit 1210, a data output buffer 1220 and a data input register 1230.

The data transfer from the main memory 1300 to the FPU 1200 is first explained. Since the start of the data transfer must be in synchronism with the MPU 1100, the execution control unit 1111 of the MPU 1100 produces the external bus cycle start signal 1116. It also produces a coprocessor data transfer request signal 1117 which indicates the data transfer between the FPU 1200 and the main memory 1300. When the signal 1117 is asserted, the built-in cache memory 1130 does not produce the external bus cycle inhibit control signal 1131 whether or not the memory address generated by the arithmetic unit 1113 is equal to the stored address in the cache memory 1130. As a result, the external bus cycle to the main memory is started by the bus interface unit 1120-1125 so that the FPU 1200 can receive the data read from the main memory 1300 to the bus 1400 (see steps 1500, 1501, 1503 and 1506 in Fig. 16).

Data may be transferred from the cache memory 1130 to the FPU 1200 in one bus cycle. In this modification, the bus interface control unit 1120 enables the data output buffer 1125 in response to the coprocessor data transfer request signal 1117, the external bus cycle start signal 1116, and a cache hit control signal 1131 which is generated when the memory address generated by the arithmetic unit 1113 is equal to the stored address in the cache memory 1130 (cache hit). Accordingly, when those addresses are equal (hit), the data is read from the address location of the cache memory 1130 corresponding to the equal address and it is supplied to the FPU 1200 through the internal bus 1124, data output buffer 1125 and external bus 1400 (see steps 1500, 1501, 1503 and 1505 of Fig. 16).

The data transfer from the FPU 1200 to the main memory 1300 is now explained. This data transfer must also be started in synchronism with the MPU 1100. Thus, the execution control unit 1111 of the MPU 1100 produces the external bus cycle start signal 1116. It also produces the coprocessor data transfer request signal 1117 which indicates the data transfer cycle with the FPU 1200. When the request signal 1117 is asserted, the bus interface unit 1120-1125 sets the read/write request signal (R/W) 1140 to the write mode but it does not enable the data output buffer 1125 and produces a signal (CDE) 1126 requesting the data output from the coprocessor so that the data output buffer 1220 of the FPU 1200 produces the write data (see steps 1500, 1502 and 1510 of Fig. 16). The data input buffer 1122 of the MPU 1100 is enabled to supply the data which the FPU 1200 is to write to the main memory 1300, to the internal data bus 1124 of the MPU. The built-in cache memory 1130 compares the memory address with the stored address as it does in a normal write cycle, and when they are equal, the data content of the cache memory 1130 is updated by the write data on the internal data bus 1124 of the MPU. In this manner, the consistency of the content of the main memory and the content of the cache memory is assured in the write mode from the coprocessor.

As explained before, by comparing the memory address in the write cycle with the stored address in the cache memory 1130, and when they are equal (cache hit), by purging the data in the cache memory 1130 corresponding to the matched address, the consistency of the data of the main memory 1300 and the data of the cache memory 1130 may be assured by reading the data from the main memory 1300 and writing the data to the cache memory 1130 in the next bus cycle.

Fig. 16 shows a flow chart of a control sequence of the built-in cache memory 1130 and the bus interface unit 1120-1125. The operations of the built-in cache memory 1130 and the bus interface unit 1120-1125 are started by the external bus cycle start signal 1116. The control sequence is now explained with reference to the flow chart.

Step 1500: If the bus cycle is in the read cycle when the operation is started by the external bus cycle start signal 1116, the process proceeds to a step 1501. If the bus cycle is in the write cycle, the process proceeds to a step 1502.

Step 1501: If the coprocessor data transfer request signal 1117 which indicates the data transfer with the FPU is asserted, the process proceeds to a step 1503. If it is negated, the process proceeds to a step 1504.

Step 1502: If the coprocessor data transfer request signal 1117 which indicates the data transfer with the FPU is asserted, the process proceeds to a step 1510. If it is negated, the process proceeds to a step 1509.

Step 1503: If the signal 1131 which indicates the equality of the memory address of the read cycle and the stored address in the cache memory is asserted, the process proceeds to a left path, and if it is negated, the process proceeds to a down path.

Step 1504: If the signal 1131 which indicates the equality of the memory address of the read cycle and the stored address in the cache memory is asserted, the process proceeds to a step 1508, and if it is negated, the process proceeds to a step 1507.

Step 1505: Since the signal 1131 indicating the cache hit has been asserted, the bus interface unit 1120-1125 of the MPU 1100 does not supply the address signal A, read signal R or the address strobe signal AS to the external bus 1400, and the data read from the cache memory 1130 by the cache hit is transferred to the data input register 1230 of the FPU 1200 through the internal bus 1124, data output buffer 1125 and external bus 1400 in one bus cycle.

The step 1505 corresponds to the above modification relating to the data transfer from the cache memory 1130 to the FPU 1200.

Step 1506: The bus interface unit 1120-1125 of the MPU 1100 supplies the address signal A, read signal R and address strobe signal AS to the external bus 1400. Thus, the data read from the main memory 1300 is transferred to the data input register 1230 of the FPU 1200 through the external bus 1400 in one bus cycle.

In the MPU 1100, the data output buffer 1125 is disabled by the bus interface control unit 1120 and the data conflict between the MPU 1100 and the main memory 1300 on the external bus is avoided.

Step 1507: In the MPU 1100, the data input buffer 1122 is enabled by the bus interface control unit 1120.

On the other hand, the data input register 1230 of the FPU 1200 is disabled by the bus interface unit 1120.

Accordingly, the bus interface unit 1120-1125 of the MPU 1100 supplies the address signal A, read signal R and the address strobe signal AS to the external bus 1400, and the data read from the main memory 1300 is transferred to the data input register DIR 1114 of the MPU 1100 through the external bus 1400 and data input buffer 1122 in one bus cycle.

It is desirable to write the transferred data to the cache memory 1130 of the MPU 1100 in accordance with the memory address of the read cycle.

Step 1508: Since the signal indicating the cache hit has been asserted, the data input buffer 1122 is disabled by the bus interface control unit 1120.

On the other hand, the data input register 1230 of the FPU 1200 is disabled by the bus interface unit 1120.

In such cache hit, the bus interface unit 1120-1125 of the MPU 1100 does not supply the address signal A, read signal R or the address strobe signal AS to the external bus 1400, and the data read from the cache memory 1130 by the cache hit is rapidly transferred to the data input register 114 of the MPU 1100.

Step 1509: The bus interface unit 1120-1125 of the MPU 1100 supplies the address signal A, write signal W and address strobe signal AS to the external bus 1400. Thus, the data in the data output register DOR 1115 of the MPU 1100 is transferred to the main memory 1300 through the internal data bus output buffer 1123, internal data bus 1124, data output buffer 1125 and external bus 1400 in one bus cycle.

Since the coprocessor data output request signal CDE 1126 is now negated by the bus interface unit 1120, the data output buffer 1220 of the FPU 1200 is disabled and the data conflict between the MPU 1100 and the FPU 1200 on the external bus 1400 is avoided.

In the cache memory 1130, the memory address in the write cycle and the stored address are compared, and if they are equal (cache hit), the cache data corresponding to the matched address is purged or it may be updated by the data of the internal data bus 1124.

When the addresses are not equal, the data of the internal data bus 1124 may be written into the address location of the cache memory 1130 corresponding to the new memory address in the write cycle.

Step 510: Since the bus interface unit 1120-1125 of the MPU 1100 supplies the address signal A, write signal W and address strobe signal AS to the external bus 1400 and the coprocessor data output request signal CDE 1126 has been asserted, the data output buffer 1220 of the FPU 1200 is enabled. Accordingly, the data in the data output buffer 1220 of the FPU 1200 is transferred to the main memory 1300 through the external bus 1400 in one bus cycle.

The data output buffer 1125 of the MPU 1100 is disabled by the bus interface unit 1120-1125 and the data conflict between the MPU 1100 and the FPU 1200 on the external bus 1400 is avoided.

In the cache memory 1130, the memory address in the write cycle is compared with the stored address as described above, and if they are equal (cache hit), the cache data corresponding to the matched address may be purged or it may be updated by the data on the internal data bus 1124.

When the addresses are not equal, the data on the internal data bus 1124 may be written into the address location of the cache memory 1130 corresponding to the new memory address in the write cycle.

The data processing system of the present invention can be easily implemented by the above control sequence.

In the present embodiment, although the internal bus 1124 in the MPU functions as a bidirectional bus in the read/write modes, a read data bus and a write data bus may be separately provided.

In the present embodiment, the address to search the built-in cache memory 1130 is a physical address, although the present invention is applicable to a data processing system in which the MPU contains a memory management unit and the built-in cache memory 1130 accesses by a logical address while the external main memory 1300 accesses by a physical address.

As described hereinabove, in accordance with MPU having a built-in cache memory of the present invention, in the read cycle which is started to transfer a data to the coprocessor, the data is read from the built-in cache memory or the main memory. Thus, the data can be transferred to the coprocessor in one bus cycle.

When the data is to be outputted from the coprocessor, the data on the bus is read into the MPU in spite of the fact that the bus read/write request signal is in the write mode, and it is written into the cache memory, or the cache memory in the MPU is searched, and if it hits, the content of the cache memory is updated by the data read into the MPU or the hit data is purged from the cache memory. Accordingly, the consistency of the data of the main memory and the cache memory is maintained.

Since the data transfer between the MPU containing the cache memory and the coprocessor is attained in one bus cycle, the overhead in the data transfer is reduced and the performance of the process by the coprocessor is improved.

## Claims

1. A data processor to be coupled with an auxiliary processor and memory means through a data bus, said data processor comprising:
cache memory means;
a first external terminal for receiving a first control signal to indicate timing of outputting data from said auxiliary processor to said data bus;
a second external terminal for receiving a second control signal to indicate writing data on said data bus to said memory means; and
control means coupled with said cache memory means and said first and second external terminals for transmitting the data on said data bus to said cache memory means, in response to said second control signal.

2. A data processor as set forth in claim 1, wherein said control means has function of transmitting the data on said data bus to said cache memory means, and function of forming said first and second control signals.

3. A data processor as set forth in claim 2, further comprising a third external terminal for receiving control signal to command said memory means to read the data, wherein said control means has function of inhibiting the outputting of the data from said cache memory means to said data bus, when the data is transferred from said memory means to said auxiliary processor.

4. A data processor as set forth in claim 3, wherein said second external terminal and said third external terminal are the same external terminal.

5. A data processor to be coupled with an auxiliary processor and memory means through a data bus and with an external device through an address bus, said data processor comprising:
a first external terminal for receiving bus right request signal from said external device;
a second external terminal for receiving control signal to recognize moving if the bus right to said external device;
a third external terminal for receiving control signal to command output of the data to said auxiliary processor;
a fourth external terminal for receiving control signal to command said memory means to write the data; and
control means coupled with said first, second, third and fourth external terminals and having means for forming control signal to command the output of the data to said auxiliary processor, and having means for inhibiting the outputting of the output command control signal through said external terminal when the bus right request signal is supplied to said first external terminal before the prescribed timing to output the control signal to said third external terminal.

6. Data processing system comprising:
a main processor;
a coprocessor to enable transfer of data based on control of said main processor; and
a memory coupled with said main processor and said coprocessor so as to enable input/output of the data,
wherein when said coprocessor is commanded to output the data, said main processor can simultaneously perform operation of taking the output data of said coprocessor into the inside and the control of the memory cycle to transfer the output data to said memory.

7. Data processing system as set forth in claim 6, wherein when said coprocessor outputs data to be transferred to said memory in accordance with the memory cycle controlled by the main processor, said main processor takes the data into the inside.

8. Data processing system as set forth in claim 6, wherein when said main processor receives data from said coprocessor, said main processor starts the memory cycle for said memory, and transfers the data to be taken into the main memory also to said memory.

9. Data processing system as set forth in claim 6, wherein said main processor takes the data outputted by said coprocessor into the cache memory.

10. Data processing system as set forth in claim 9, wherein said cache memory makes the data of desired address in said memory correspond to the address, and holds the data commonly with said memory.

11. Data processing system comprising:
a processor having bus arbitration function;
a second bus slave module for transferring data to a first bus slave module in accordance with bus cycle controlled by said processor; and
a module which can request the bus open to said processor,
wherein said processor supplies control signal to command said second bus slave module the data output start timing to the first bus slave module, and the command of the data output start timing by the control signal is inhibited during the bus open period to the module.

12. Data processing system as set forth in claim 11, said processor detects existence of the bus open request by the module before the bus cycle is started for the data transfer from the second bus slave module to the first bus slave module, and when the bus open request is detected, the bus right is abandoned and the command of the data output start timing to the second bus slave module during prescribed period.

13. Data processing system as set forth in claim 12, wherein the second bus slave module is a coprocessor depending on said processor, and the first bus slave module is a memory.

14. Data processing system comprising:
a microprocessor;
a coprocessor; and
an external device,
wherein said microprocessor is provided with an external terminal which exclusively receives the bus access end signal from said coprocessor.

15. Data processing system as set forth in claim 14, wherein said dxternal device is a main memory, and said microprocessor and said coprocessor are constituted by semiconductor integrated circuit device of one chip respectively.

16. Data processing system comprising:
a first memory for holding data;
first and second processors for processing data held in said first memory; and
a bus line connecting said first memory to said first and second processors,
wherein said first processor is provided with means for outputting address signal and read/write indication signal to said bus line when result of the data processing in said second processor is transferred to said first memory, and in response to the address signal and the read/write indication signal, said second processor outputs the result of the data processing to said bus line and the data is written in said first memory, and control means for controlling a bus interface unit of said first processor is provided so that the write data on said bus line is taken in said first processor at the same time substantially with the write of the data to said first processor.

17. Data processing system as set forth in claim 16, wherein said first processor further comprises a second memory for holding copy of the data stored in said first memory, and said first processor is provided with means for discriminating whether copy of the data of address written in said first memory is held to said second memory or not, using the address or information as the base thereof, when result of the data processing in said second processor is transferred to said first memory, and also provided with means for updating content of said second memory, using the write data taken by the control of the bus interface unit of said first processor, if the copy of the data of the address is held in said second memory.

18. Data processing system as set forth in claim 16, wherein said first processor further comprises a second memory for holding copy of the data stored in said first memory, and said first processor is provided with means for writing the data taken by the control of the interface unit of said first processor, using the address or information as the base thereof, when result of the data processing in said second processor is transferred to said first memory.

19. Data processing system as set forth in claim 18, wherein said first processor is provided with means for storing the write data taken by the control of the interface unit into said second memory, when result of the data processing in said second processor is transferred to said first memory, if the address indicates the stack area.

20. Data processing system as set forth in claim 16, wherein said first processor further comprises a second memory for holding copy of the data stored in said first memory, and said first processor is provided with means for inhibiting the read of the data from said second memory and for reading the data from said first memory, when the data is transferred from said first memory to said second processor.

21. A data processing system comprising:
a microprocessor (1100) including an execution unit (1110), a cache memory (1130) and a bus interface unit (1120-1125);
an external bus (1400) coupled to said microprocessor;
a main memory (1300) coupled to said external bus; and
a coprocessor (1200) coupled to said external bus;
wherein said cache memory and said main memory are accessed by a memory address generated by said execution unit of said microprocessor;

wherein said execution unit produces a coprocessor data transfer request signal and an external bus cycle start signal during data transfer with said coprocessor; and
wherein said bus interface unit of said microprocessor requests readout of data from one of said cache memory and said main memory to said external bus during data transfer to said coprocessor in response to said memory address, said coprocessor data transfer request signal and said external bus cycle start signal.

22. A data processing system according to Claim 21, wherein when a data is to be transferred from said coprocessor to said main memory through said external bus through said bus interface unit of said microprocessor, the transfer data on said external bus is written into an address location of said cache memory corresponding to the memory address generated by said execution unit.

23. A data processing system according to Claim 21, wherein when a data is to be transferred from said coprocessor to said main memory through said external bus, a data at an address location of said cache memory which corresponds to the memory address generated by said execution unit is purged.

24. A microprocessor for use in a data processing system having an external bus (1400), a main memory (1300) coupled to said external bus and a coprocessor (1200) coupled to said external bus, comprising:
an execution unit (1110);
a cache memory (1130); and
a bus interface unit (1120-1125);
wherein said cache memory and said main memory are accessed by a memory address generated by said execution unit of said microprocessor;
wherein said execution unit produces a coprocessor data transfer request signal and an external bus cycle start signal during data transfer with said coprocessor; and
wherein said bus interface unit of said microprocessor requests readout of data from one of said cache memory and said main memory to said external bus during data transfer to said coprocessor in response to said memory address, said coprocessor data transfer request signal and said external bus cycle start signal.

25. A microprocessor according to Claim 24, wherein when a data is to be transferred from said coprocessor to said main memory through said external bus through said bus interface unit of said microprocessor, the transfer data on said external bus is written into an address location of said cache memory corresponding to the memory address generated by said execution unit.

26. A microprocessor according to Claim 24, wherein when a data is to be transferred from said coprocessor to said main memory through said external bus, a data at an address location of said cache memory which corresponds to the memory address generated by said execution unit is purged.

A data processing system comprising:

a microprocessor (1100) including an execution unit (1110), a cache memory (1130) and a bus interface unit (1120-1125);

an external bus (1400) coupled to said microprocessor;

a main memory (1300) coupled to said external bus; and

a coprocessor (1200) coupled to said external bus;

wherein said cache memory and said main memory are accessed by a memory address generated by said execution unit of said microprocessor;

wherein said execution unit produces a coprocessor data transfer request signal and an external bus cycle start signal during data transfer with said coprocessor; and

wherein said bus interface unit of said microprocessor requests readout of the data from said coprocessor to said external bus in the data transfer from said coprocessor to said main memory in response to said memory address, said coprocessor data transfer request signal and said external bus cycle start signal, and through said bus interface unit of said microprocessor, the transfer data on said external bus is written into an address location of the cache memory which corresponds to the memory address generated by said execution unit.

28. A data processing system according to Claim 27, wherein said bus interface unit of said microprocessor disables the data transfer from said execution unit to said external bus during data transfer from said coprocessor to said main memory.

29. A data processing system comprising:

a microprocesor (1100) including an execution unit (1110), a cache memory (1130) and a bus interface unit (1120-1125);

an external bus (1400) coupled to said microprocessor;

a main memory (1300) coupled to said external bus; and

a coprocessor (1200) coupled to said external bus;

wherein said cache memory and said main memory are accessed by a memory address generated by said execution unit of said microprocessor;

wherein said execution unit produces a coprocessor data transfer request signal and an external bus cycle start signal during data transfer with said coprocessor; and

wherein said bus interface unit of said microprocessor requests readout of the data from said coprocessor to said external bus during data transfer from said coprocessor to said main memory in response to said memory address, said coprocessor data transfer request signal and said external bus cycle start signal, and a data at an address location of the cache memory which corresponds to the memory address generated by said execution unit is purged.

30. A data processing system according to Claim 29, wherein said bus interface unit of said microprocessor disables the data transfer from said execution unit to said external bus during data transfer from said coprocessor to said main memory.

31. A microprocessor for use in a data processing system having an external bus (1400), a main memory (1300) coupled to said external bus and a coprocessor (1200) coupled to said external bus, comprising:

an execution unit (1110);

a cache memory (1130); and

a bus interface unit (1120-1125);

wherein said cache memory and said main memory are accessed by a memory address generated by said execution unit of said microprocessor;

wherein said execution unit produces a coprocessor data transfer request signal and an external bus cycle start signal during data transfer with said coprocessor; and

wherein said bus interface unit of said microprocessor requests readout of the data from said coprocessor to said external bus during data transfer from said coprocessor to said main memory in response to said memory address, said coprocessor data transfer request signal and said external bus cycle start signal, and through said bus interface unit of said microprocessor, the transfer data on said external bus is written into an address location of the cache memory which corresponds to the memory address generated by said execution unit.

32. A microprocessor according to Claim 31, wherein said bus interface unit of said microprocessor disables the data transfer from said execution unit to said external bus during data transfer from said coprocessor to said main memory.

33. A microprocessor for use in a data processing system having an external bus (1400), a main memory (1300) coupled to said external bus and a coprocessor (1200) coupled to said external bus, comprising:

an execution unit (1110);

a cache memory (1130); and

a bus interface unit (1120-1125);

wherein said cache memory and said main memory are accessed by a memory address generated by said execution unit of said microprocessor;

wherein said execution unit produces a coprocessor data transfer request signal and an external bus cycle start signal during data transfer with said coprocessor; and

wherein said bus interface unit of said microprocessor requests readout of the data from said coprocessor to said external bus during data transfer from said coprocessor to said main memory in response to said memory address, said coprocessor data transfer request signal and said external bus cycle start signal, and a data at an address location of the cache memory which corresponds to the memory address generated by said execution unit is purged.

34. A microprocessor according to Claim 33, wherein said bus interface unit of said microprocessor disables the data transfer from said execution unit to said external bus during data transfer from said coprocessor to said main memory.

## FIG. 1

# FIG. 2

EXECUTION UNIT

MEMORY MANAGEMENT UNIT — 10

ADRSS

ASSOCIATIVE MEMORY PART — 11 / 20

DATA MEMORY PART — 21

OPERAND CACHE MEMORY

ADRS

DAT

8

CACHE CONTROLLER — 12

$\overline{DCf}$

$\overline{DCm}$

INSTRUCTION CONTROL UNIT

INTERFACE CONTROLLER — 13

CPST

BAT

$\overline{BC}$

$\overline{BS}$

$\overline{CDE}$

R/$\overline{W}$

$\overline{AS}$

MAIN PROCESSOR

INPUT OUTPUT CONTROL UNIT

7   6   1

# FIG. 3

(A) MCYC

(B) CPST

(C) $\overline{CDE}$

(D) R/$\overline{W}$

(E) ADRS

(F) BAT

(G) $\overline{BC}$

(H) $\overline{BS}$

(I) $\overline{AS}$

(J) $\overline{DCf}$

(K) $\overline{DCm}$

(L) DAT( DATA TO BE TAKEN IN OPERAND CACHE MEMORY 11 )

(M) DAT( DATA TO BE TAKEN IN MAIN MEMORY 3 )

ONE MACHINE CYCLE

FIG. 4

FIG. 5

FIG. 6

FIG. 7

# FIG. 8

# FIG. 9

## FIG. 10

(A) BAT
(B) R/$\overline{W}$
(C) $\overline{BS}$
(D) $\overline{DC}$
(E) $\overline{CPDC}$

110

## FIG. 11

FIG. 12

# FIG. 13

FIG. 14

FIG. 15

EP 0 318 702 A2

# FIG. 16

SIGNAL 116
ASSERT

READ/WRITE · 1500

READ → 1501
SIGNAL 117

WRITE → 1502
SIGNAL 117

ASSERT

ASSERT

NEGATE

1503
SIGNAL 131

1504
SIGNAL 131

ASSERT

ASSERT

NEGATE

NEGATE

1505
CACHE MEMORY
↓
FPU

1506
MAIN MEMORY
↓
FPU

1507
MAIN MEMORY
↓
MPU

1508
CACHE MEMORY
↓
MPU

1509
MPU
↓
MAIN MEMORY
- - -
FPU
DATA OUTPUT
INHIBIT
- - -
CACHE MEMORY
DATA RENEWING,
PURGING OR WRITING

1510
FPU
↓
MAIN MEMORY
- - -
MPU
DATA OUTPUT
INHIBIT
- - -
CACHE MEMORY
DATA RENEWING,
PURGING OR WRITING

EP 0 318 702 A2